# EUROPEAN PATENT APPLICATION

(11) **EP 1 353 297 A2**
(43) Date of publication of application: **15.10.2003**
(21) Application number: 03252297.1
(22) Date of filing: 11.04.2003
(51) Int. Cl.: G06T 17/40

(54) **CAD system for 3D objects**

(30) Priority: 11.04.2002 JP 2002109107
(71) Applicant: J.S.T. Mfg. Co., Ltd., Osaka, 542-0081 (JP)
(72) Inventor: Wada, Akio, Kobe, Hyogo 651-2242 (JP)
(74) Representative: Beresford, Keith Denis Lewis

(57) **Abstract**

The present invention aims at enabling an operator to recognize a relative positional relationship between drawing graphics and the other graphics in a virtual 3D space easily, and realizing more accurate design. CPU obtains inputted conditions that determine an orientation of the operation plane (parallel to the Y-Z coordinate plane). CPU then displays an operation plane 420 at the starting point 520 position for the next line segment, in parallel to the Y-Z coordinate plane. The plane 420 is displayed instead of the operation plane 410. The operator clicks an appropriate position on the operation plane 420 to draw next line segment. CPU sets the selected position as an end point 540, and draws a line segment 640 on the operation plane 420.

## Description

### Technical Field of Invention

This invention relates to an apparatus and method for drawing graphics, moving graphics and the like in a virtual 3D space.

### Background Art

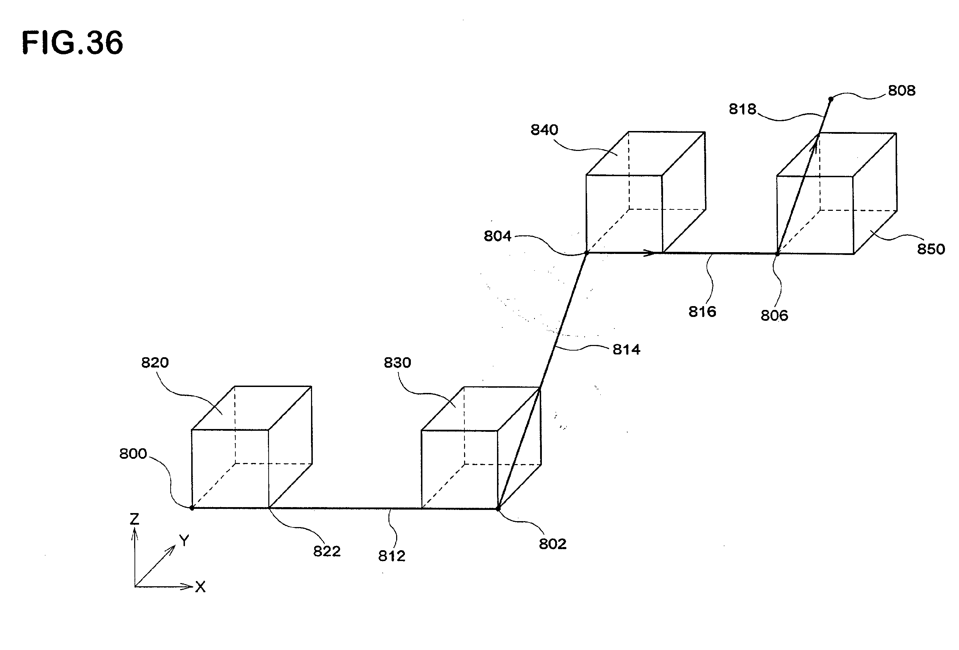

A 3D CAD (Computer Aided Design) system is often used to draw 3D graphics. An operator can not recognize a depth of the virtual 3D space accurately with a 2-dimensional display screen. It is difficult for the operator to adequately specify a direction when drawing a line segment, a position when drawing a point and the like. To solve this technical problem, an apparatus for inputting information of a pipe arrangement is described in Japanese publication number Hei 9-73476. The apparatus displays a guidance graphic for drawing, and demands the operator to specify a direction when drawing a line segment and a position when a drawing point. The guidance graphic is a perspective view of a 3-dimensional cube. Fig. 36 shows a process that the apparatus performs in the case of drawing line segments continuously in the virtual 3D space.

The apparatus sets a coordinate system, a reference point 800 and a quadrant for drawing in response to the operator's command. The coordinate system comprises 3D coordinate axes, and the reference point 800 is a starting point for a line segment. The quadrant for drawing is a zone that determines a direction for drawing a line segment from the reference point, and the center of the zone is located on a reference point.

In the quadrant, the apparatus displays a guidance graphic 820 for drawing which is a perspective view of a cube comprising the reference point 800 as an apex. The operator specifies an apex 822 of the guidance graphic 820 to select a drawing direction of a line segment from the reference point 800. The apparatus displays an arrow line for the drawing direction in the specified direction. The operator specifies a point 802 on the arrow line as a drawing point. The apparatus sets the point 802 as a drawing point, and then draws a line segment 812 between the reference point 800 and the drawing point 802.

The apparatus then sets the drawing point 802 as the reference point, and performs a series of processes for setting a quadrant, a guidance graphic 830, selecting a direction of a line segment and setting a drawing point 804 on the basis of the point 802. Herewith, a line segment 814 is drawn. This series of processes that is performed repeatedly with the result that, guidance graphics 830, 840 and 850 are set, drawing points 804, 806 and 808 are set, and line segments 814, 816 and 818 are drawn.

### Technical Problem and Its Solution

However, the following problems arise in the apparatus described above. Firstly, when displaying the guidance graphic 820, 830, 840 or 850, it is difficult for the operator to recognize the relative positional relationship between the reference point (or line segment) and the other graphics in the virtual 3D space. Secondly, complicated operations are needed, as the operator must specify a quadrant for drawing, a direction for a line segment to be drawn and a drawing point to command the drawing of a line segment. Thirdly, it is difficult to specify the drawing direction and drawing point, as the guidance graphic 820, 830, 840 or 850 and the other graphic have the potential to overlap in the virtual space.

An object of the present invention is to provide a 3-dimensional graphics processing apparatus and a method therefore enabling an operator to recognize the relative positional relationship between drawing graphics (or drawn graphics) and the other graphics in a virtual 3D space, thereby facilitating more accurate design.

(1)(24)(49) In accordance with characteristics of the present invention, there is provided a 3-dimensional graphics processing apparatus comprising: an input part for receiving inputted information; a graphic display part for displaying graphics; and a processing part for performing a graphic process in a virtual 3D space,
wherein the processing part comprises: a plane generating means operable to generate a process plane in the virtual 3D space based on a reference point or a reference line whose location is determined by an object graphic; and a graphics processing means operable to perform a process upon the object graphic on the basis of the process plane in response to inputted information.

Accordingly, an operator can recognize the relative positional relationship between the object graphic and the other graphics in the virtual 3D space on the basis of the 2-dimensional process plane. Moreover, as the apparatus performs the process upon the object graphic on the basis of the 2-dimensional plane, an operator can input a command for the process easily. Furthermore, as a 2-dimensional plane is used, an operator can recognize the depth of the 3D space easily, and the graphic process can be performed more accurately.

(2)(25) In accordance with characteristics of the present invention, the object graphic includes plural graphics, the plane generating means generates a process plane based on a graphics drawn previously, and the graphics processing means draws a next graphic on the basis of the process plane.

Accordingly, as a command for specifying the object graphic is saved, a process for generating the process plane and a process upon the object graphic can be accelerated.

(3)(26) In accordance with characteristics of the present invention, the reference point is an end point or a starting point of the graphic drawn just before. Accordingly, as a command for specifying a reference point is saved, a process for generating the process plane and a process upon the object graphic can be accelerated.

(4)(27) In accordance with characteristics of the present invention, the object graphic is selected from graphics stored previously and then is located in the virtual 3D space. Accordingly, for example, part drawings can be located in the virtual 3D space based on location data of the part drawings stored previously.

(5)(28) In accordance with characteristics of the present invention, the graphics processing means sets the end point of the object graphic as a starting point of a new graphic and then draws the new graphic based on the starting point, as the process upon the object graphic.

Accordingly, the new graphic (the graphic including the end point of the object graphic as a starting point) can be drawn speedily. For example, a graphic connected by plural line segments can be completed by being drawn continuously each line segment.

(6)(29) In accordance with characteristics of the present invention, the graphics processing means moves or transforms the object graphic on the basis of the process plane, as the process upon the object graphic. Accordingly, the object graphic can be located at the desired position more accurately on the basis of the process plane.

(7)(30) In accordance with characteristics of the present invention, the plane generating means generates the process plane based on inputted orientation information for a process plane. Accordingly, the process plane can be determined based on the reference point (or the reference line) and the orientation information. For example, the orientation of a process plane generated previously can be changed based on the orientation information inputted by an operator. Also, each process plane generated in the future can be set based on the orientation information inputted by an operator.

(8)(31) In accordance with characteristics of the present invention, the reference point is selected in the object graphic or on the surface of the object graphic. Accordingly, for example, the process plane can be generated based on the position which is located on the 2-dimensional object graphic or in the 3D object graphic, the position selected by an operator.

(9)(32) In accordance with characteristics of the present invention, the processing part displays a ground plane parallel to an X-Y, Y-Z or Z-X coordinate plane in the virtual 3D space on the graphic display part.

Accordingly, the depth of the virtual 3D space can be recognized easily on the basis of the ground plane. Furthermore, the positions of the process plane and graphics in the virtual 3D space can be recognized on the basis of the ground plane parallel to an X-Y, Y-Z or Z-X coordinate plane.

(10)(33) In accordance with characteristics of the present invention, the plane generating means generates the process plane parallel to an X-Y, Y-Z or Z-X coordinate plane based on the orientation information for the process plane. Accordingly, by recognizing the relative positional relationship between the process plane and the ground plane, an operator can recognize the position of the process plane in the virtual 3D space.

(11)(34) In accordance with characteristics of the present invention, the graphics processing means obtains an inputted drawing position on the process plane, and then draws graphics on the process plane based on the drawing position. Accordingly, the graphics can be drawn on the process plane.

(12)(35) In accordance with characteristics of the present invention, the graphics processing means connects or assembles graphics to be processed and graphics existing in the virtual 3D space. Accordingly, drawings (for example, part drawings) can be connected or assembled in the virtual 3D space.

(13)(36) In accordance with characteristics of the present invention, the plane generating means moves the process plane in response to inputted information. Accordingly, the graphics can be drawn at an appropriate position in the virtual 3D space, on the basis of the process plane set at an appropriate position.

(14)(37)(38)(39) In accordance with characteristics of the present invention, the processing part displays graphics on the graphic display part by shifting a viewpoint position. Accordingly, if the apparatus performs both a process for generating a process plane and a process for shifting a viewpoint position, the command for a process upon the object graphic (for example, a command for drawing graphics) can be simplified.

(15)(40) In accordance with characteristics of the present invention, the processing part displays the process plane at the center of the display screen of the graphic display part every time the processing part performs the process upon the object graphic.

For example, along with setting an end point of a drawn line segment as a point of focus, and generating (or moving) the process plane located at the end position, the process plane can be displayed at the center of the display screen. Therefore, a state in which the part of the process plane is not displayed on the screen can be prevented. A command for drawing graphics can therefore be simplified in the case of drawing large graphics.

(16)(41) In accordance with characteristics of the present invention, the processing part displays graphics on the graphic display part from a view perpendicular to the process plane generated by the plane generating means. Accordingly, in the case of drawing a 2-dimensional graphic on the process plane, the shape of the graphic can be recognized easily and an operation for drawing the graphic can be simplified.

(17)(42) In accordance with characteristics of the present invention, the processing part displays an initial graphic for setting the process plane initially in the virtual 3D space on the graphic display part, and then the plane generating means generates the process plane on the basis of the initial graphic. Accordingly, even if no object graphics exist in the virtual 3D space, the process plane can be generated on the basis of the initial graphic.

(18)(43) In accordance with characteristics of the present invention, the process plane is an assembly comprised of plural dots or lines located on a flat plane. Accordingly, the graphics existing beside an operation plane can be seen through the process plane.

(19)(44) In accordance with characteristics of the present invention, the process plane is an assembly comprised of plural dots or lines located in the shape of a curved surface with a curvature radius. Accordingly, a curved line (with a curvature radius) can be drawn on the process plane easily.

(20)(45) In accordance with characteristics of the present invention, the graphics processing means draws a line segment or draws plural connected line segments. Accordingly, for example, the apparatus can be applied to the design of harnesses or pipe arrangements and the like.

(21)(46) In accordance with characteristics of the present invention, the graphics processing means calculates an overall length of a drawn line segment or a length of a line segment. Accordingly, for example, in the case of designing harnesses and the like, an operator can obtain the length of a harness easily.

(22)(47) In accordance with characteristics of the present invention, the ground plane is an assembly comprised of a plurality of equally spaced dots or lines. Accordingly, if the process plane is generated perpendicular to the ground plane, an operator can recognize the position of the process plane or graphics drawn on the process plane on the basis of a cross-line between the ground plane and the process plane.

(23)(48) In accordance with characteristics of the present invention, the process plane is semi-transparent so that an operator can see through the process plane to view graphics behind the process plane.

Accordingly, the process plane enables a visual field to be unhindered. In case the process plane and a graphic cross, the operator can recognize the part in the graphic front side of the plane (or the part in the graphic behind the plane). In that case, the operator can recognize the relative positional relationship between the graphic and the process plane because of a clear cross-line between the graphic and the plane.

(50)(51)(52) In accordance with characteristics of the present invention, there is provided a 3-dimensional graphics processing apparatus comprising: an input part for receiving inputted information; a graphic display part for displaying graphics; and a processing part for performing a graphic process in a virtual 3D space,
wherein the processing part comprises: a plane generating means operable to generate a process plane including an end point of a drawn graphic in the virtual 3D space; and a graphics processing means operable to draw a new graphic on the process plane from a starting point corresponding to the end point of the drawn graphic.

Accordingly, in the case of drawing the new graphic which comprises the end point of the drawn graphic as the starting point, an operator can recognize the relative positional relationship between the object graphic and the other graphics in the virtual 3D space, on the basis of 2-dimensional process plane. For example, it is useful in the design of harnesses or pipe arrangement and the like. Moreover, as the apparatus performs the process upon the object graphic on the basis of a 2-dimensional plane, an operator can input a command for the process easily.

The term "plane generating means" in this invention refers to means for generating a process plane based on a reference point or a reference line whose location is determined by an object graphic. In the first embodiment described below, "plane generating means" corresponds to CPU 120 that performs each step S18, S22, S32 or S36 of Fig. 4A-B (S182, S184 or S186 of Fig. 5A, S322, S324 or S326 of Fig. 5B, S222 of Fig. 6A). In the second embodiment described below, "plane generating means" corresponds to CPU 120 that performs step S606 or S614 of Fig. 33A. This includes not only generating a plane, but also generating plural planes.

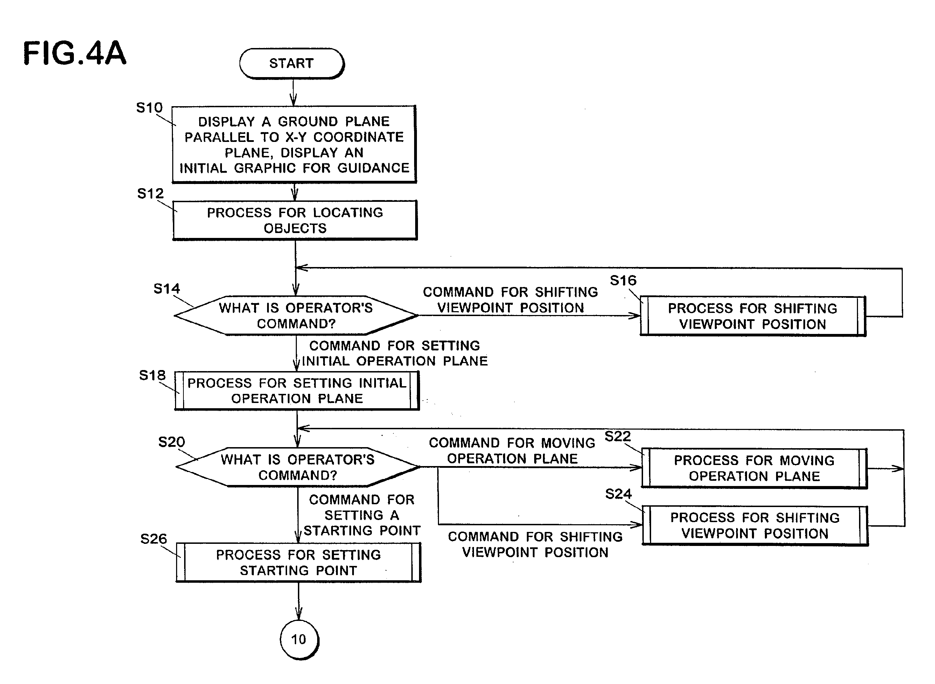

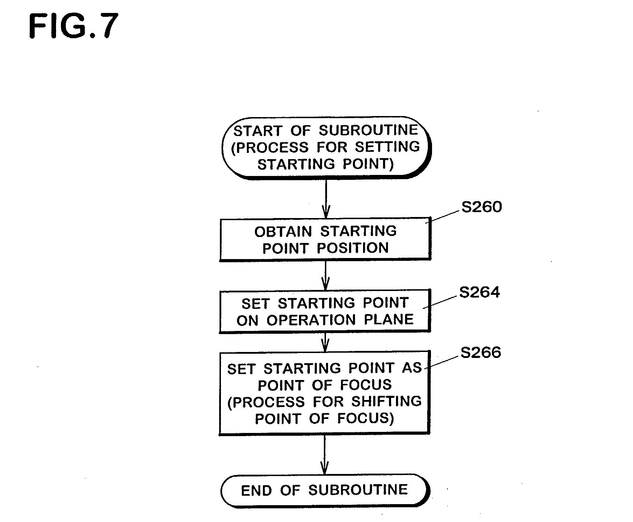

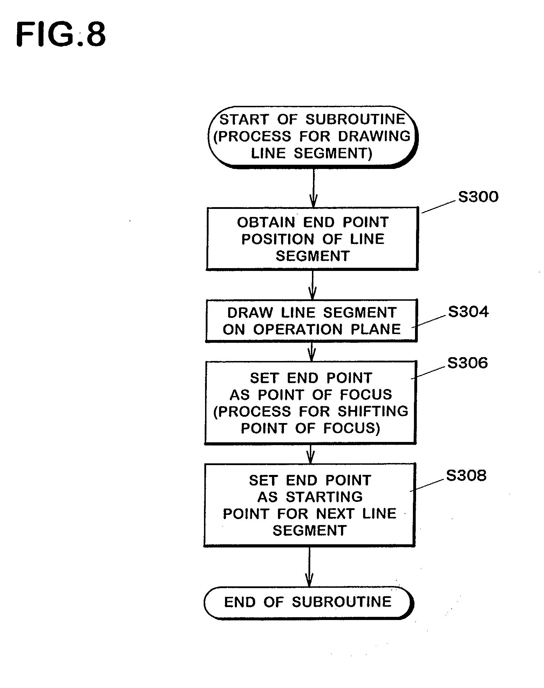

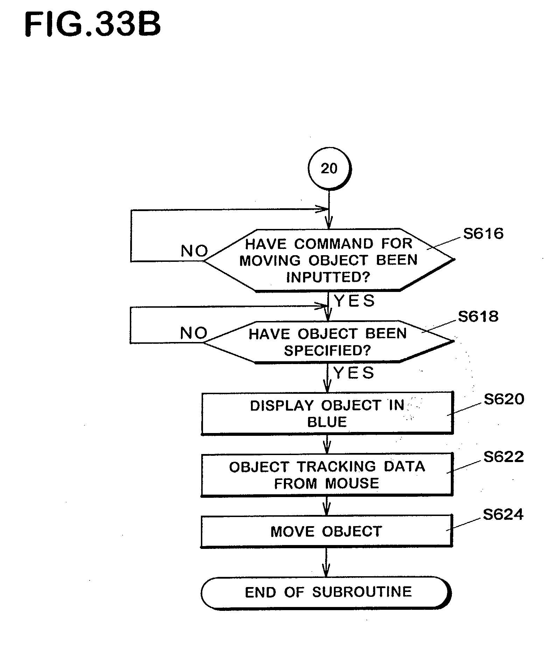

The term "graphics processing means" in this invention refers to means for performing a process upon an object graphic on the basis of a process plane. In the first embodiment described below, "graphics processing means" corresponds to CPU 120 that performs step S26 or S30 of Fig. 4A-B (S304 of Fig. 8, S264 of Fig. 7). In the second embodiment described below, "graphics processing means" corresponds to CPU 120 that performs step S624 in Fig. 33B.

The term "object graphic" in this invention refers to a graphic that determines a reference point or a reference line location. For example, "object graphic" corresponds to a graphic to be drawn or moved. In the first embodiment described below, "object graphic" corresponds to each line segment 620, 640 660 or 680 when each operation plane 410, 420, 430 or 440 is generated. The term also corresponds to object A when operation plane 410 is generated. The term also corresponds to initial graphic 310 for guidance when operation plane 400 is generated. In the second embodiment described below, "object graphic" corresponds to object E.

The term "a process upon the object graphic" in this invention includes processes for drawing, moving, and transforming the graphic and like processes. In the first embodiment described below, "a process upon the object graphic" corresponds to a process for drawing line segments and a process for setting a starting point. In the second embodiment described below, "a process upon the object graphic" corresponds to a process for moving an object.

The term "reference point whose location is determined by an object graphic" in this invention includes not only a point in an object graphic or on the surface of an object graphic, but also a point spaced apart from an object graphic. For example, the reference point can be a point spaced apart from an object graphic by a predetermined distance.

The term "reference line whose location is determined by an object graphic" in this invention includes not only a line in an object graphic or on the surface of an object graphic, but also a line spaced apart from an object graphic. For example, the reference line can be a line spaced apart from an object graphic by a predetermined distance.

The term "process plane" in this invention is a plane generated based on a reference point or a reference line. In the first embodiment described below, "process plane" corresponds to each operation plane 400, 410, 420, 430 or 440. In the second embodiment described below, each operation plane 750 or 760 corresponds to "process plane". This includes not only a flat plane, but also a curved surface.

The term "process plane" includes a transparent plane and a semi-transparent plane. This includes a plane that an operator can recognize a position of the process plane and see through the process plane to view graphics behind the process plane.

The term "process upon the object graphic performed on the basis of the process plane" in this invention includes not only a process performed on a process plane, but also a process performed on a plane or a line spaced apart from a process plane by a predetermined distance. This includes, for example, a process for drawing line segments on a plane parallel to a process plane or in direction perpendicular to a process plane.

The term "orientation information for a process plane" in this invention refers to information that determines an orientation of process plane that has been generated, set or moved. In the first embodiment described below, "orientation information for a process plane" corresponds to conditions inputted with button 210, 212 or 214 that determine an orientation of an operation plane (parallel to an X-Y, Y-Z or Z-X coordinate plane). In the second embodiment described below, the term also corresponds to an angle inputted by an operator.

The term "ground plane" in this invention refers to a plane parallel to the X-Y, Y-Z or Z-X coordinate plane in a virtual 3D space. In the embodiment described below, "ground plane" corresponds to a ground plane 300.

The term "program" as used herein refers not only to a program that can be directly executed with a CPU, but also to program of a source format, compression-processed program, coded program and the like. The program may be supplied as instructions stored on a storage medium or carried by a signal.

Other features, objects, applications, and advantages of the present invention will become clear in reference to the following embodiments and drawings.

### Brief Description of Drawings

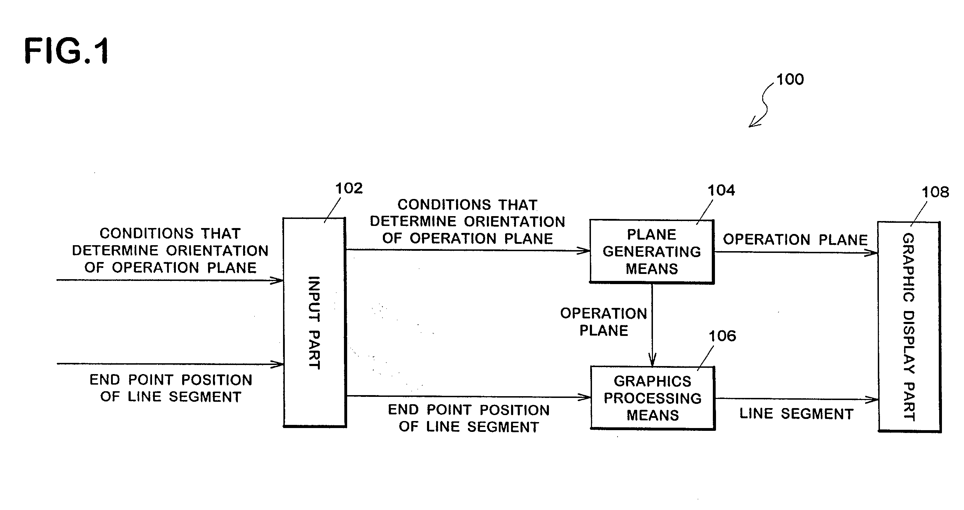

Fig. 1 is a block diagram of a CAD apparatus 100 in the first embodiment;

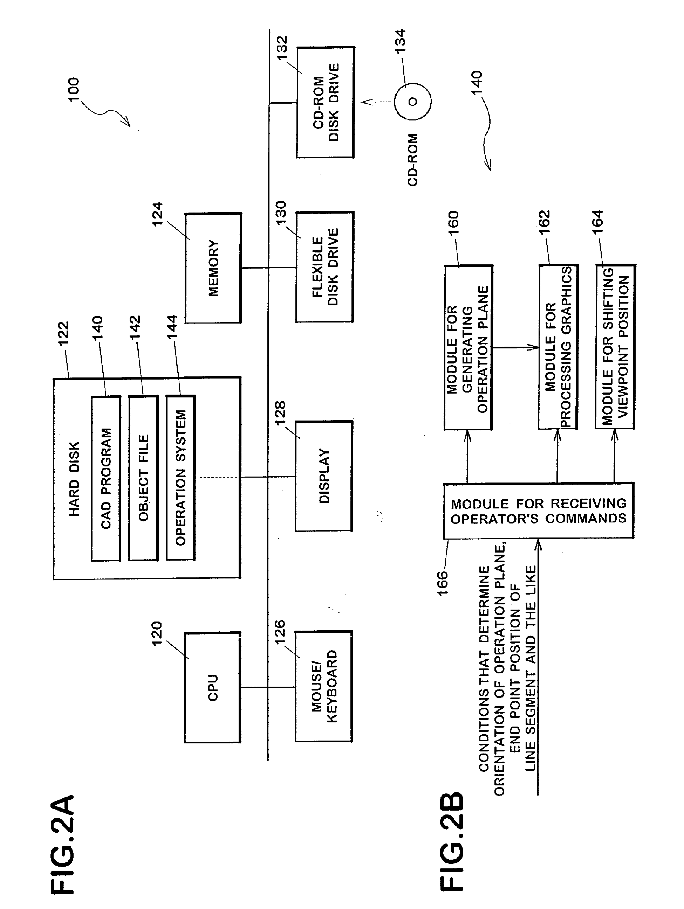

Fig. 2 is a diagram showing the hardware structure of CAD apparatus 100;

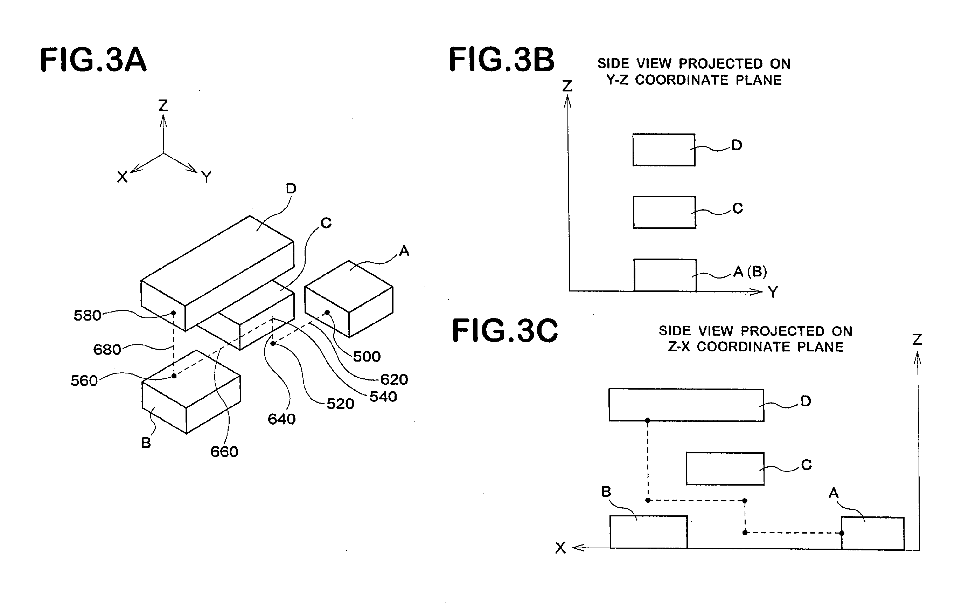

Fig. 3 is a target drawing in the first embodiment;
Fig. 4A is a flowchart showing the processes performed by CAD apparatus 100;

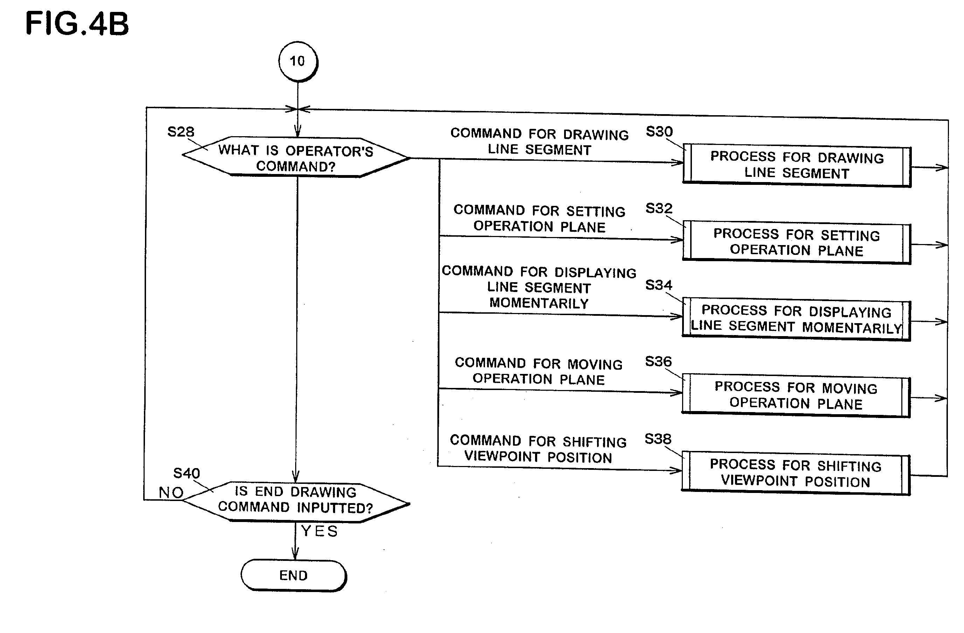

Fig. 4B is a flowchart showing the processes performed by CAD apparatus 100;

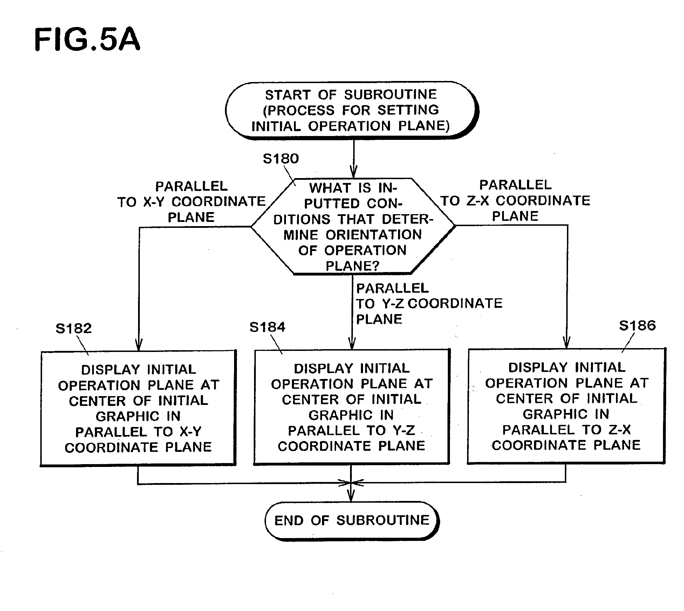

Fig. 5A is a flowchart showing the process for setting the initial operation plane;

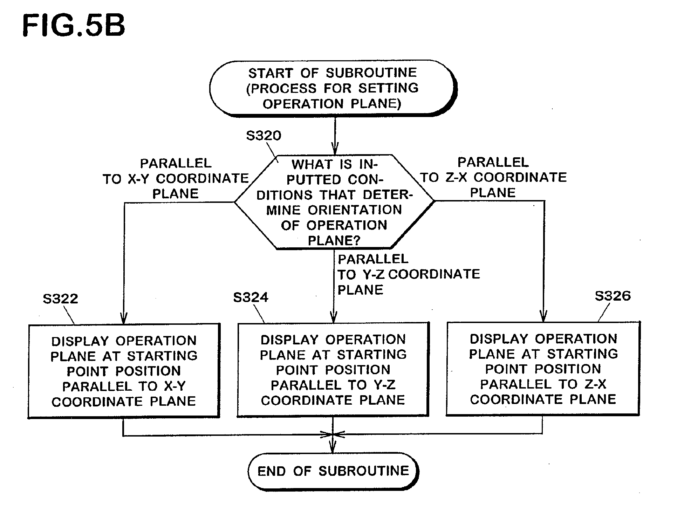

Fig. 5B is a flowchart showing the process for setting an operation plane;

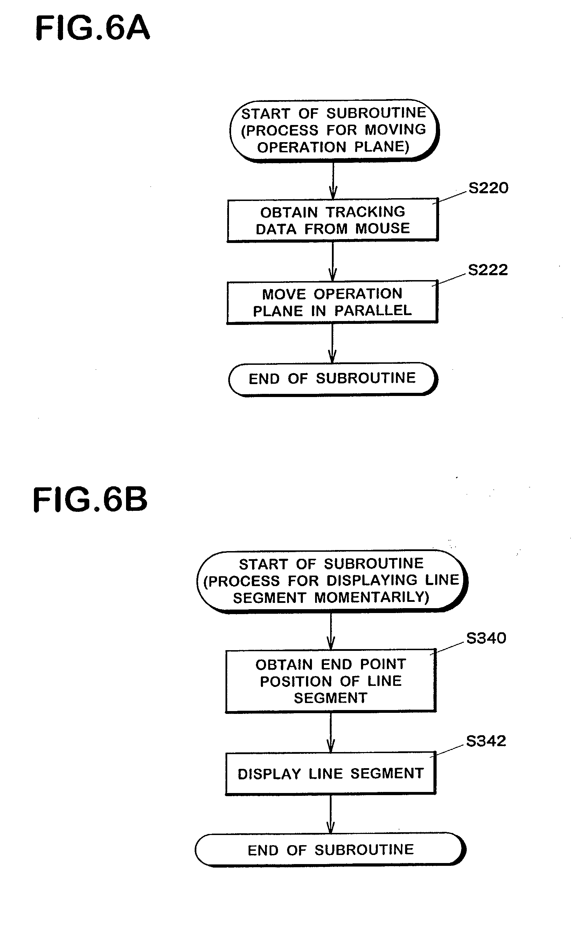

Fig. 6 is a flowchart showing the process for moving the operation plane and the process for displaying a line segment momentarily;
Fig. 7 is a flowchart showing the process for setting a starting point of line segment;
Fig. 8 is a flowchart showing the process for drawing a line segment;

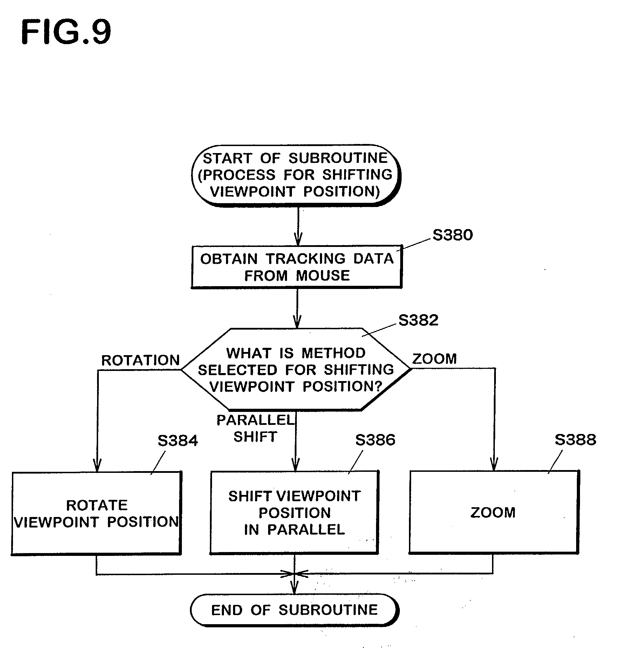

Fig. 9 is a flowchart showing the process for shifting the viewpoint position;

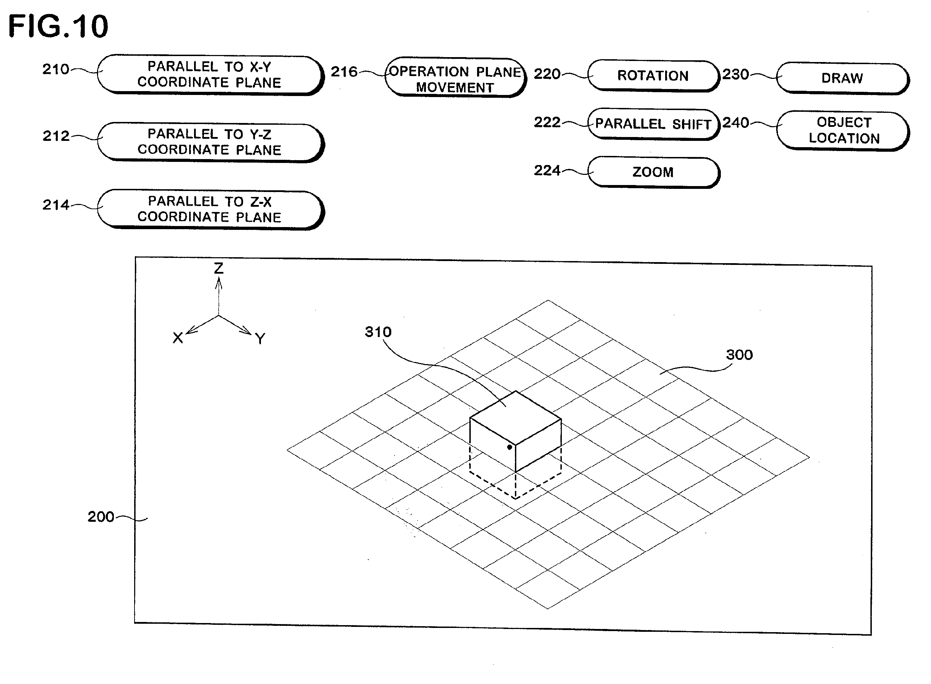

Fig. 10 is a display image showing an initial screen;

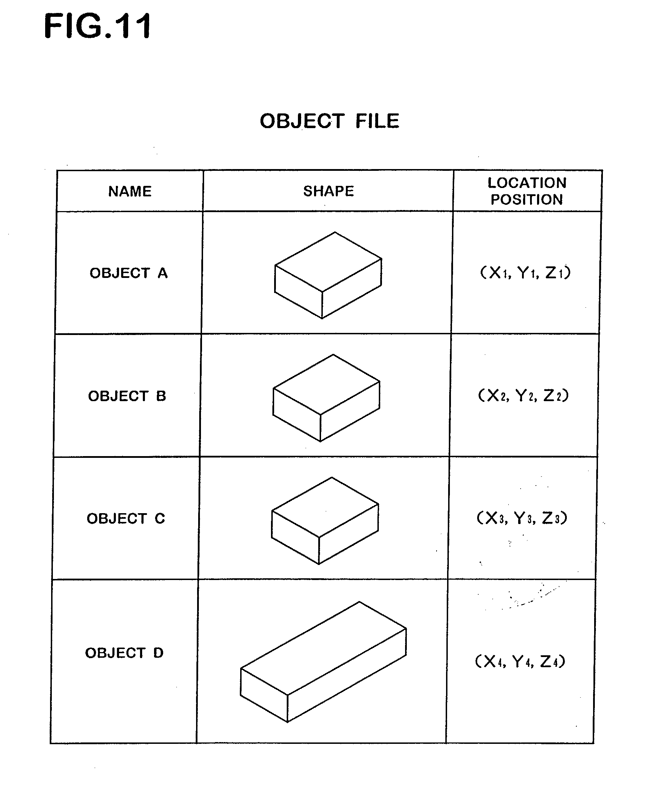

Fig. 11 is a table showing data in object file 142;

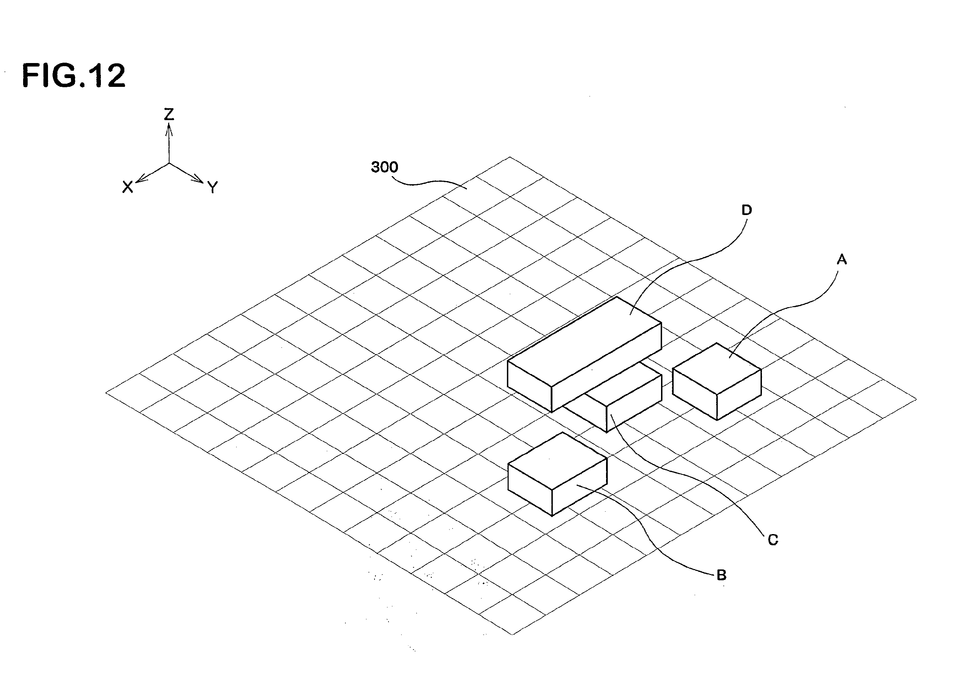

Fig. 12 is a display image showing a layout in which objects A-D are located;

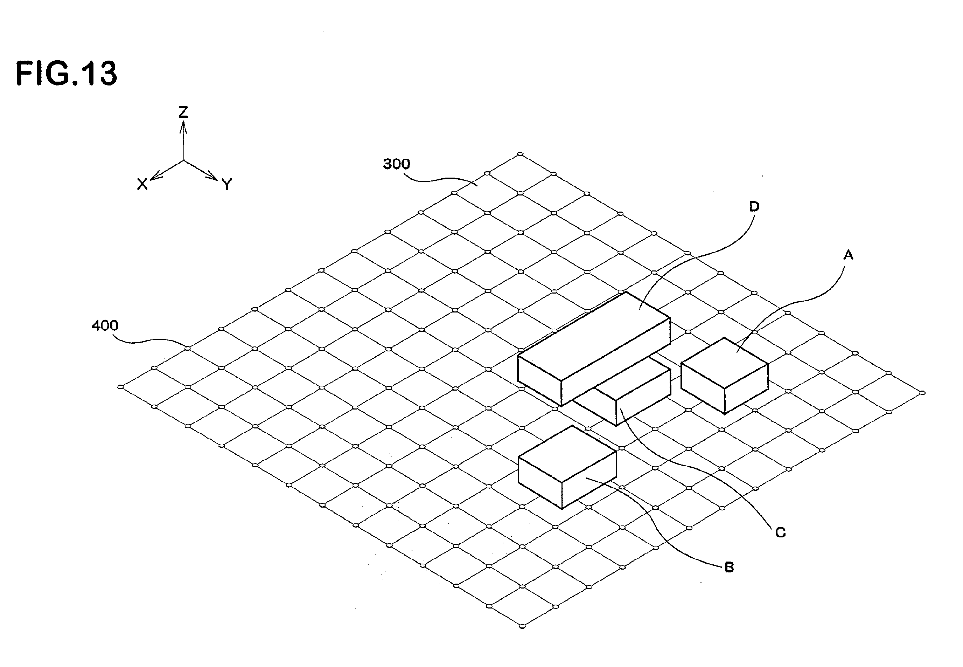

Fig. 13 is a display image showing a layout in which an initial operation plane 400 is set;

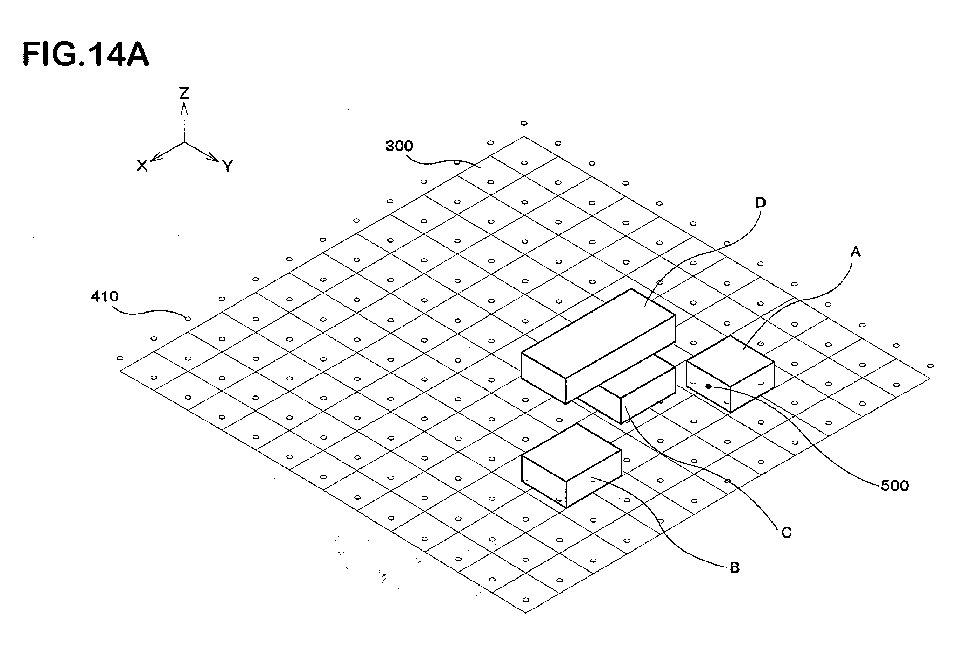

Fig. 14A is a display image showing a layout in which an initial operation plane 410 is set;

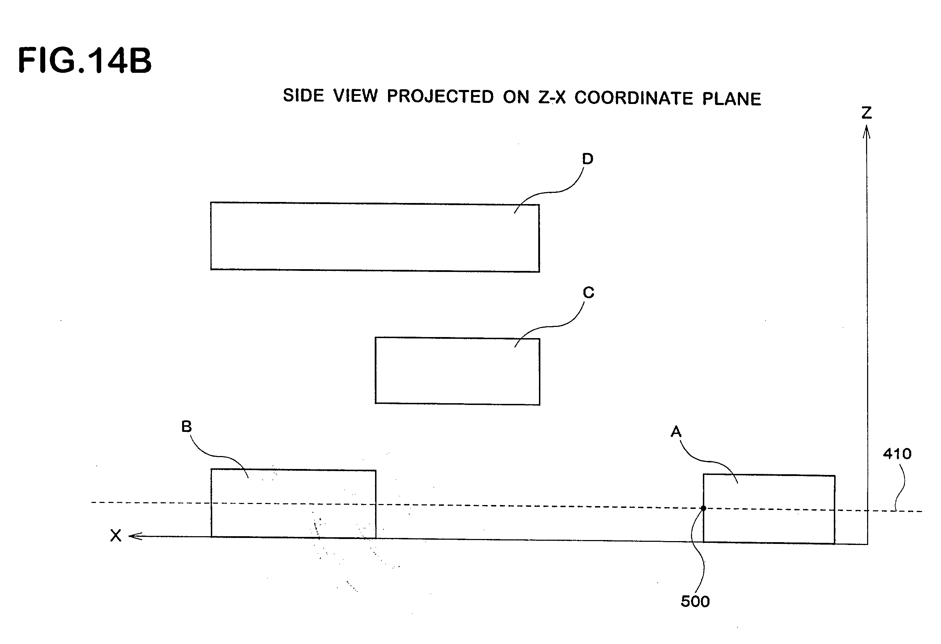

Fig. 14B is a side view of Fig. 14A projected on the Z-X coordinate plane;

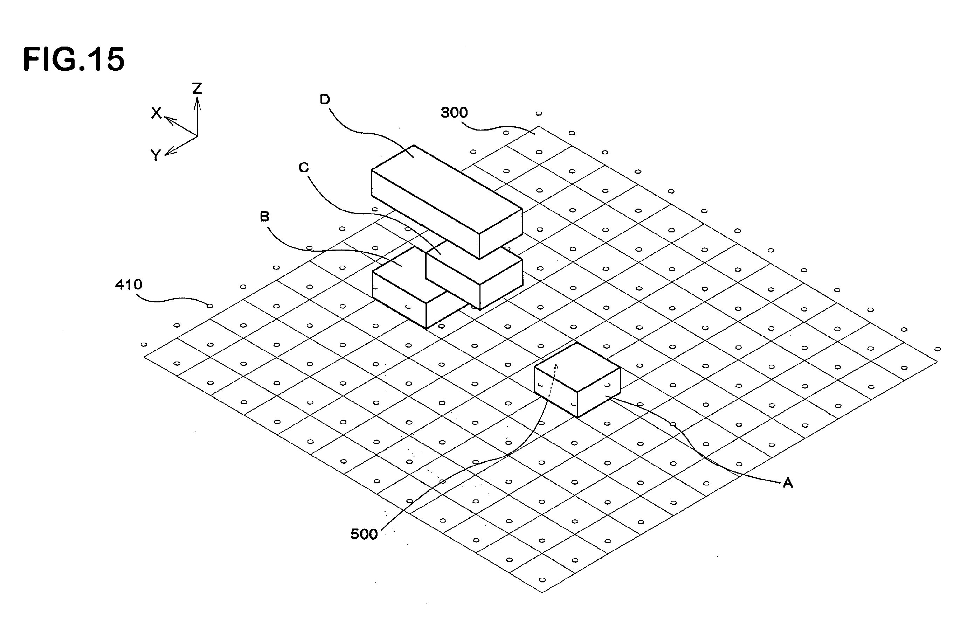

Fig. 15 is a different view of Fig. 14A;

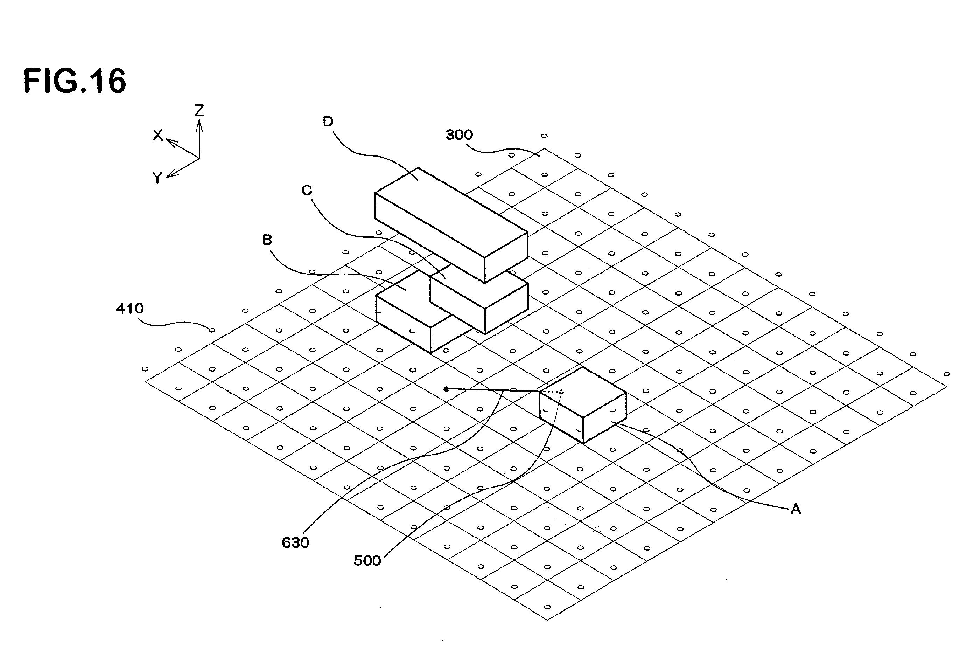

Fig. 16 is a display image showing a layout in which a line segment 630 is displayed momentarily;

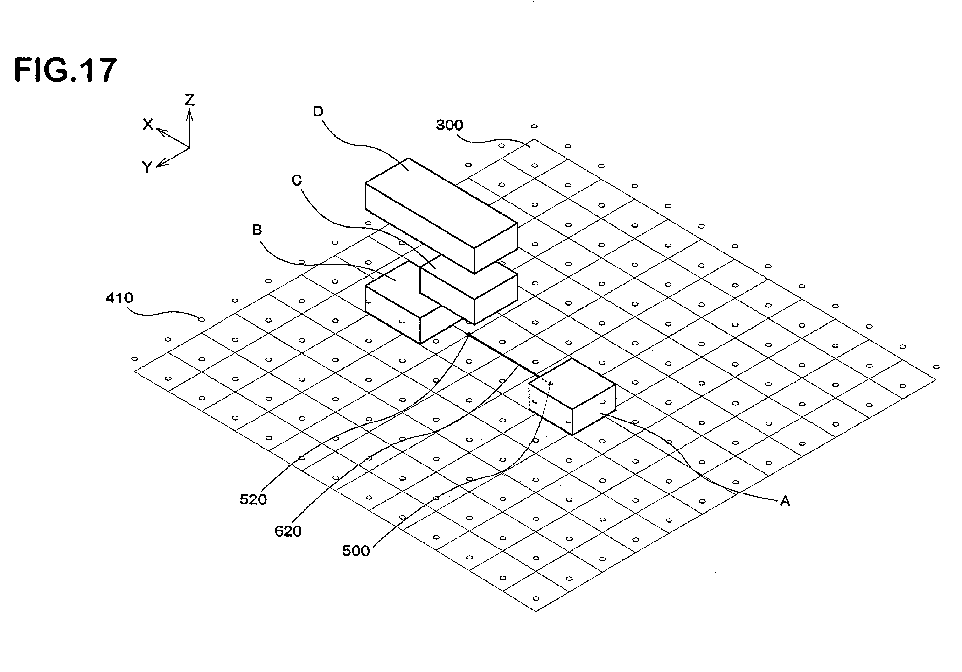

Fig. 17 is a display image showing a layout in which a line segment 620 is drawn;

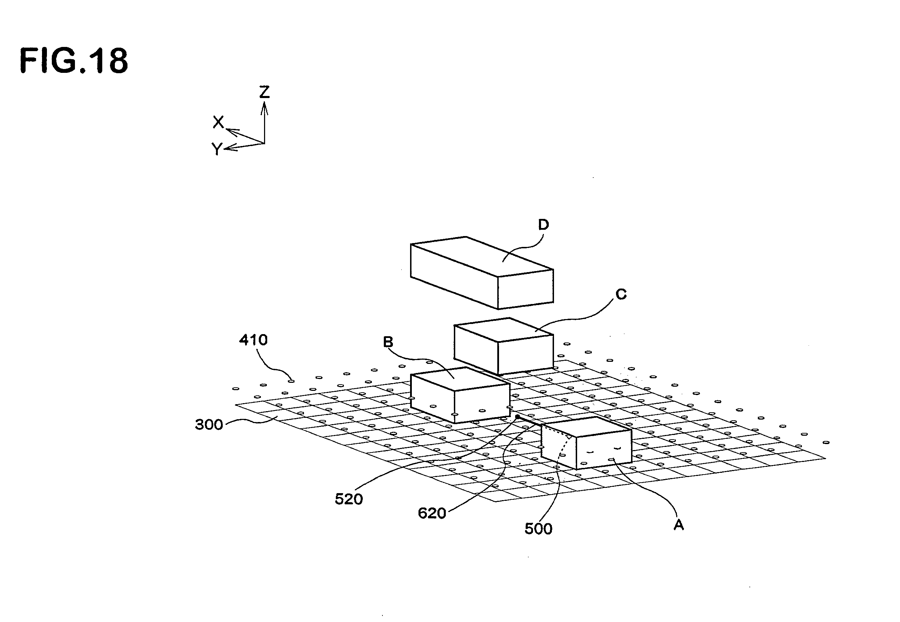

Fig. 18 is a different view of Fig. 17;

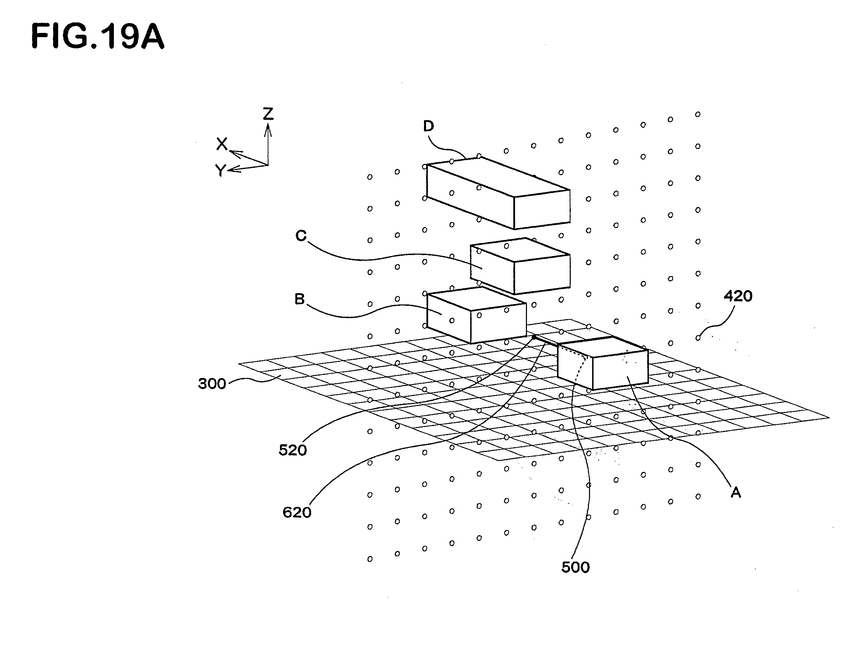

Fig. 19A is a display image showing a layout in which an operation plane 420 is set;

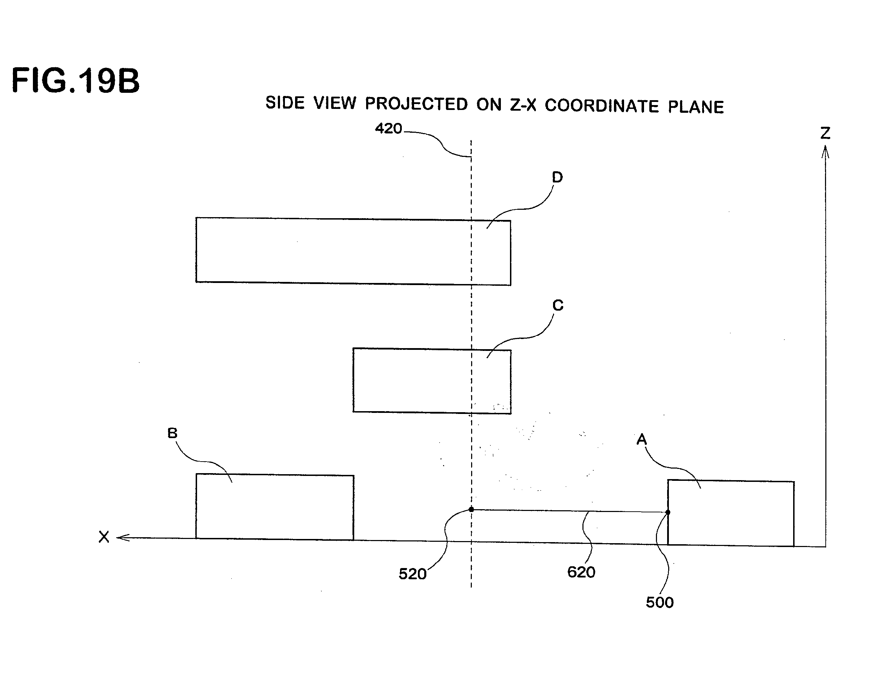

Fig. 19B is a side view of Fig. 19A projected on the Z-X coordinate plane;

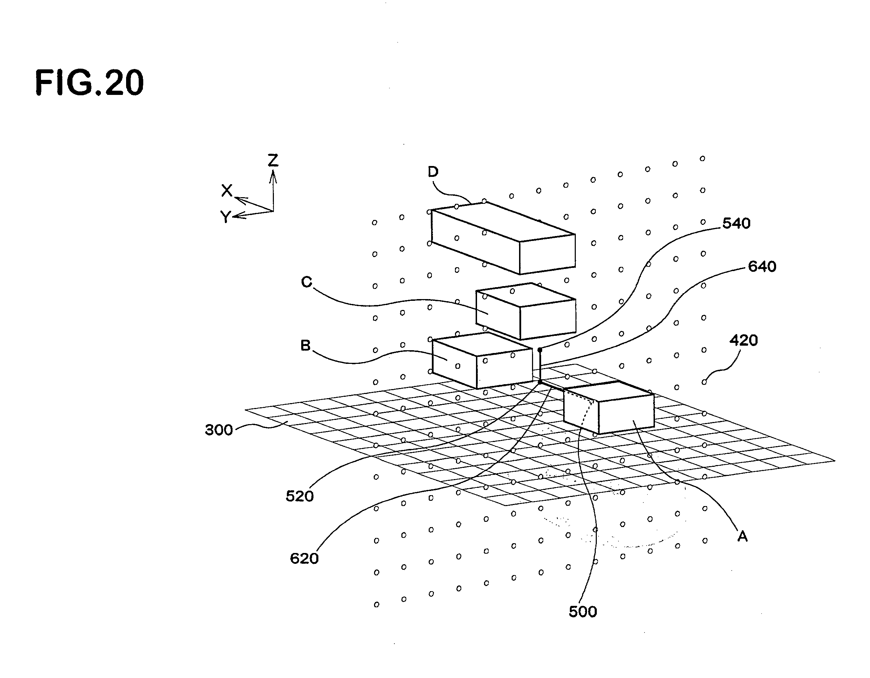

Fig. 20 is a display image showing a layout in which a line segment 640 is drawn;

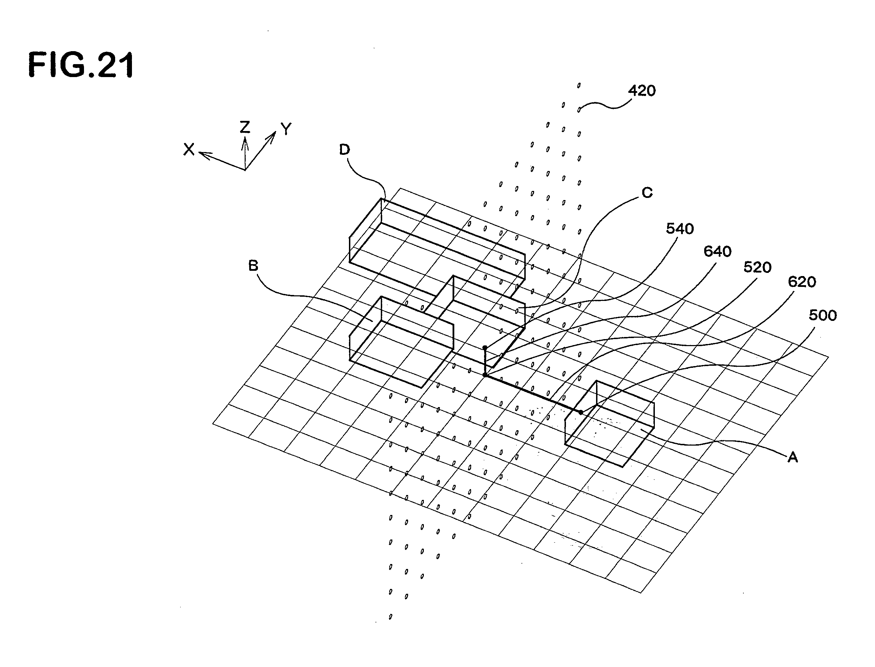

Fig. 21 is a different view of Fig. 20;

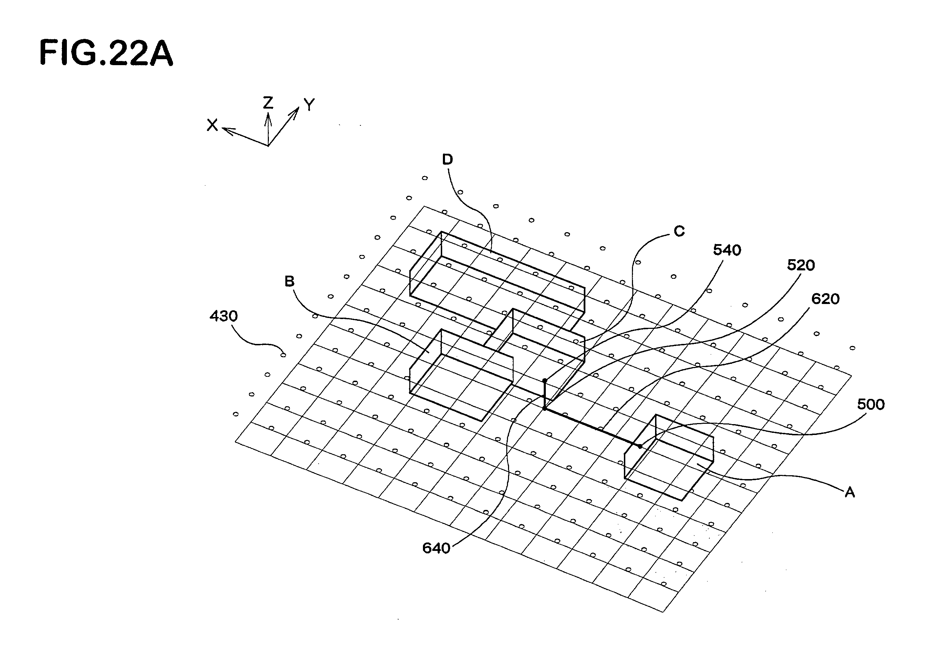

Fig. 22A is a display image showing a layout in which an operation plane 430 is set;

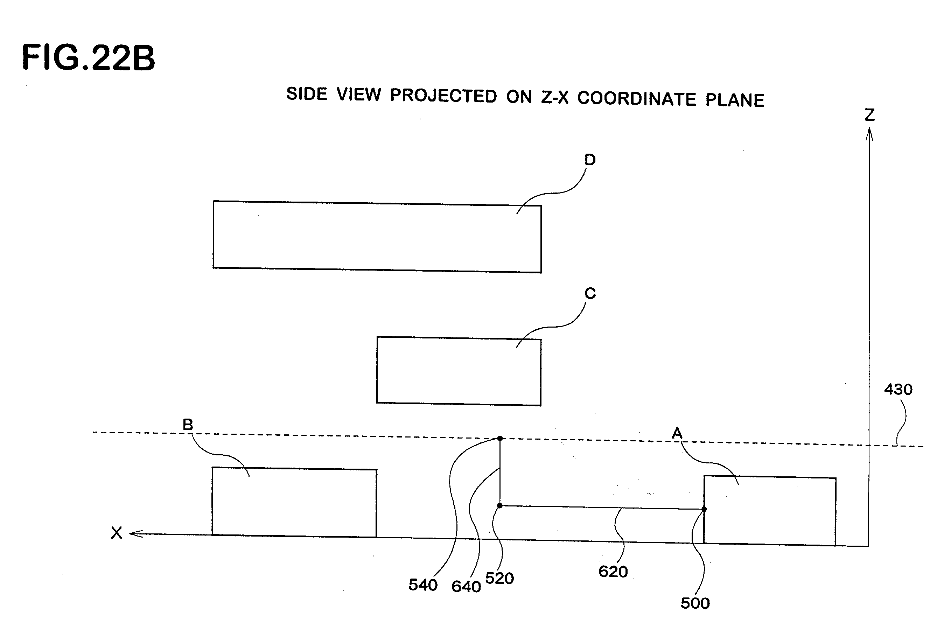

Fig. 22B is a side view of Fig. 22A projected on the Z-X coordinate plane;

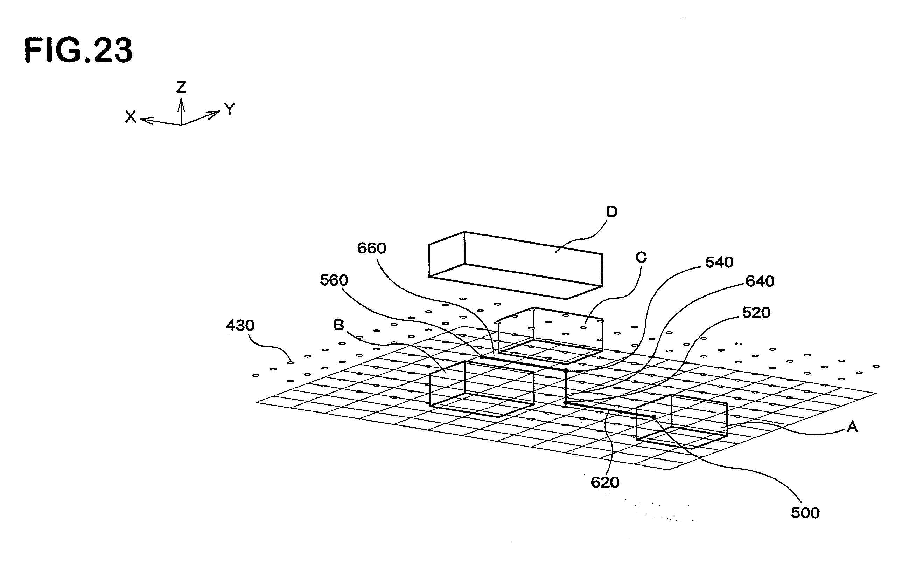

Fig. 23 is a display image showing a layout in which a line segment 660 is drawn;

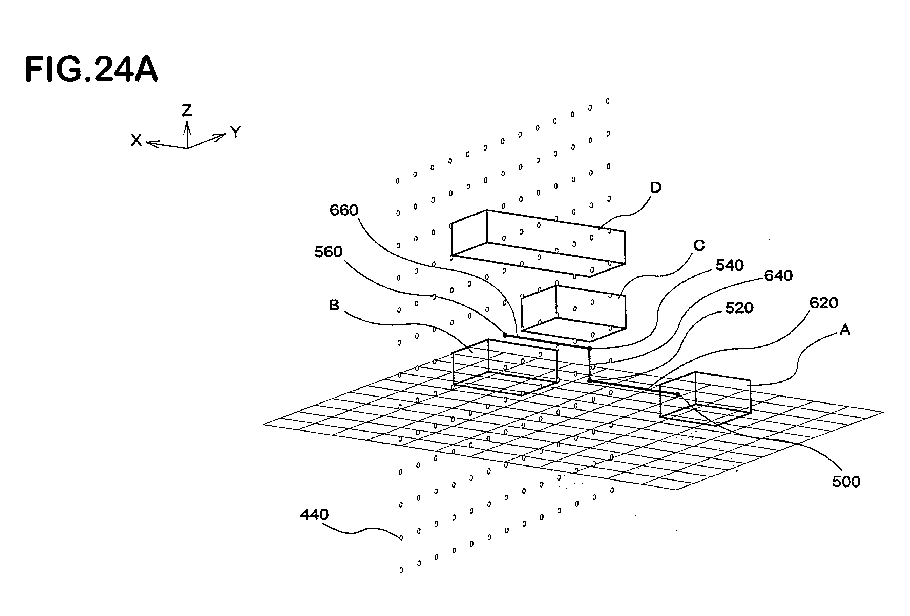

Fig. 24A is a display image showing a layout in which an operation plane 440 is set;

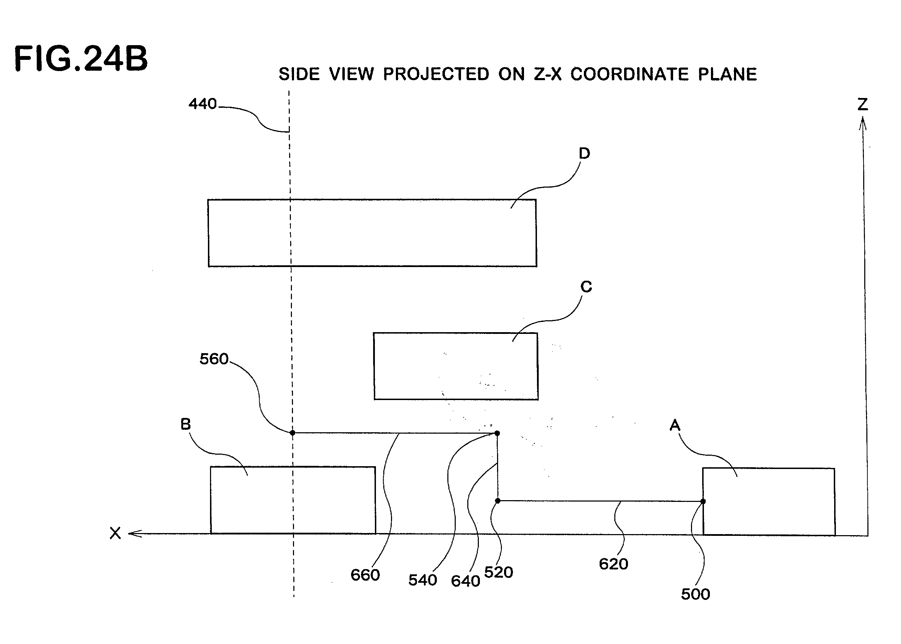

Fig. 24B is a side view of Fig. 24A projected on the Z-X coordinate plane;

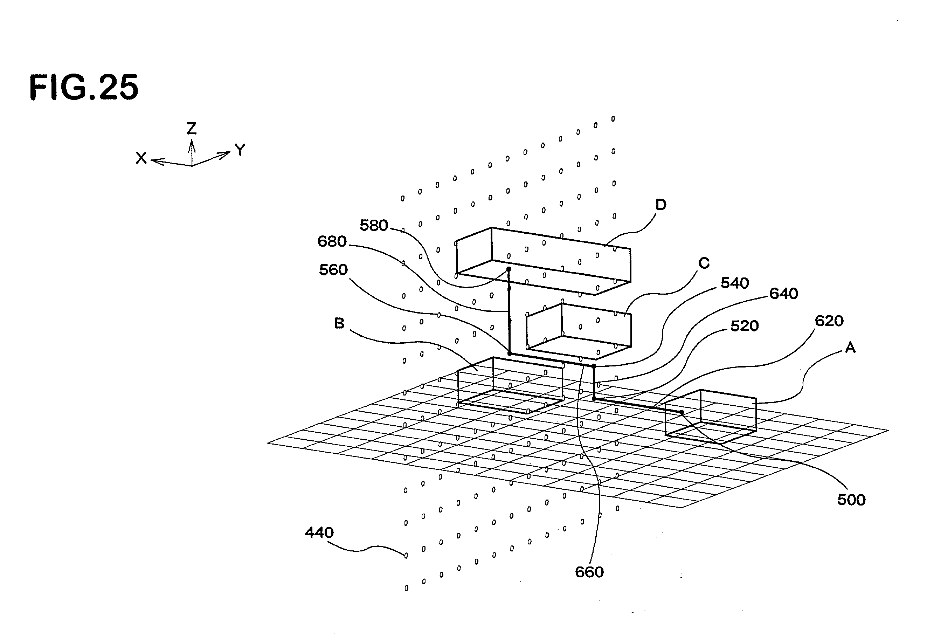

Fig. 25 is a display image showing a layout in which a line segment 680 is drawn;

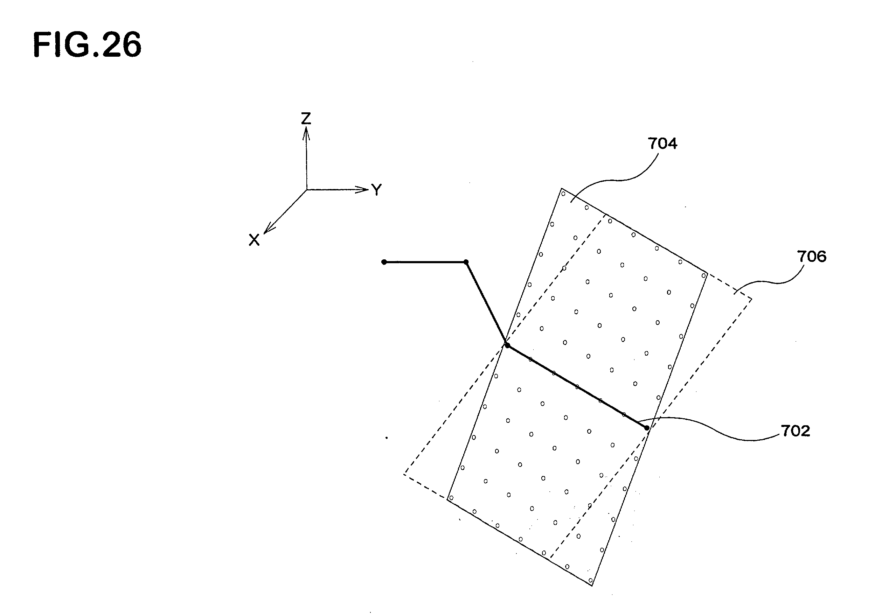

Fig. 26 is a display image showing operation planes generated on the basis of a reference (a line segment).

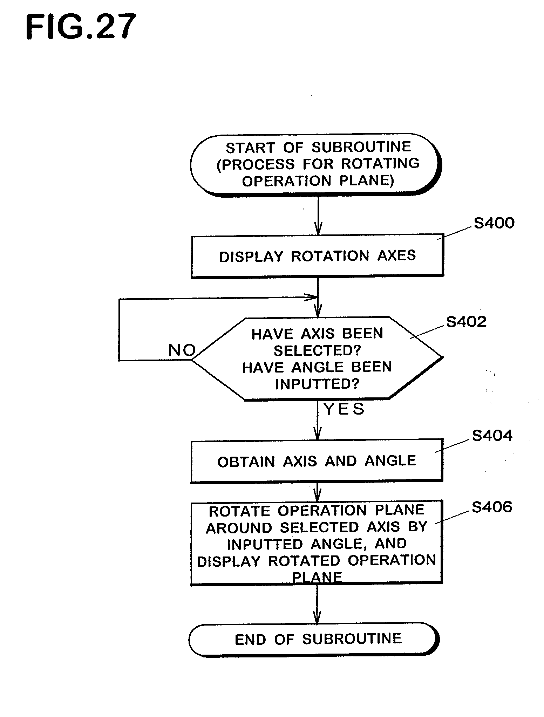

Fig. 27 is a flowchart showing the process for rotating an operation plane around a rotation axis;

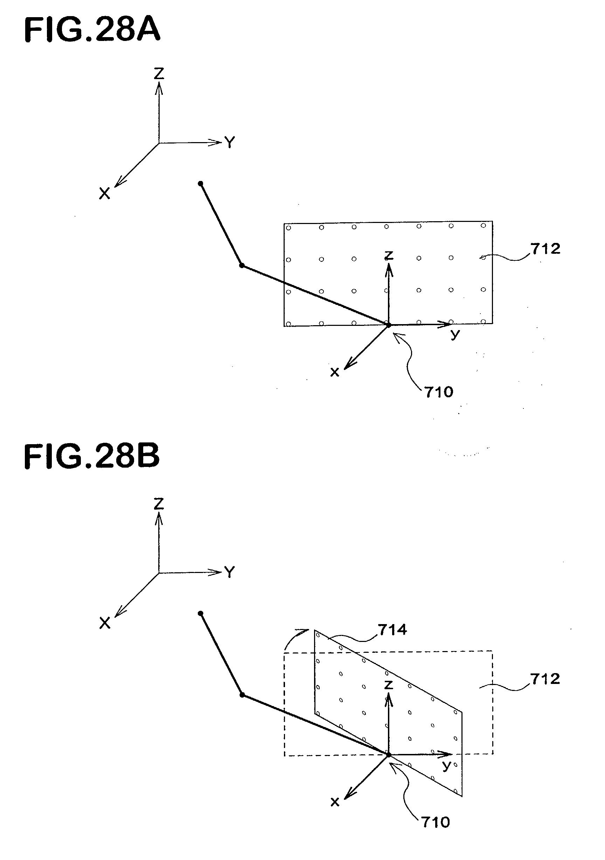

Fig. 28 is a display image showing an operation plane rotated around a rotation axis.

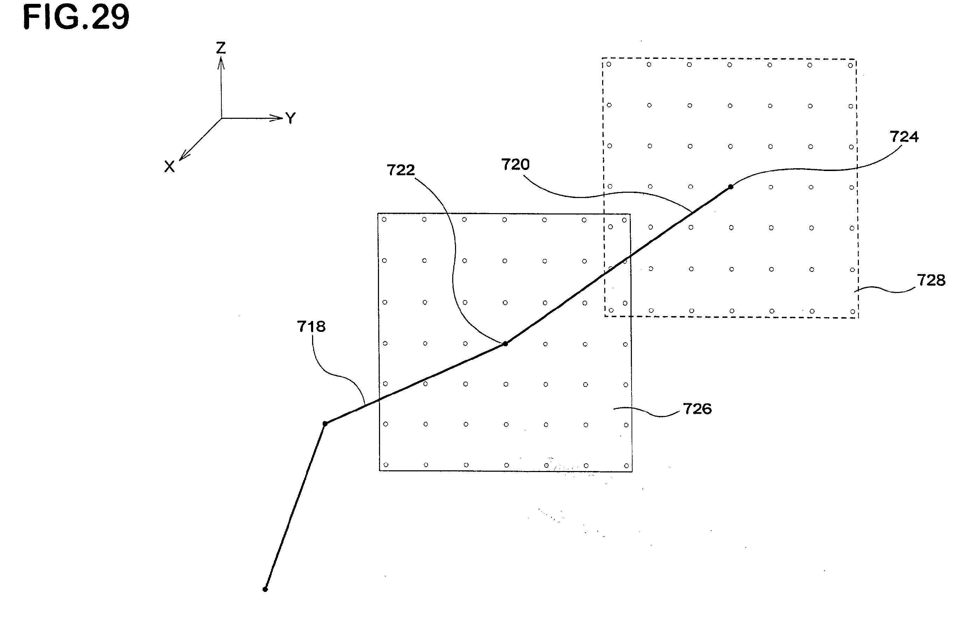

Fig. 29 is a display image showing an operation plane moved at the same time as drawing a line segment.

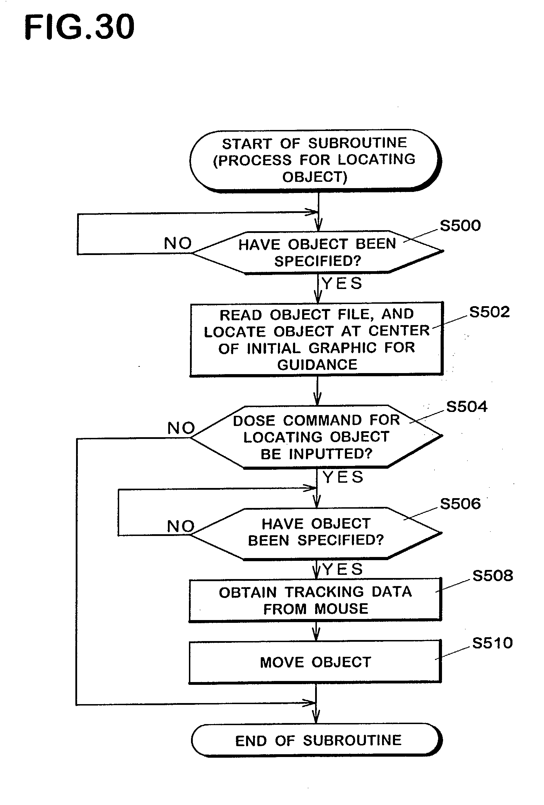

Fig. 30 is a flowchart showing the process for locating objects in the further embodiment;

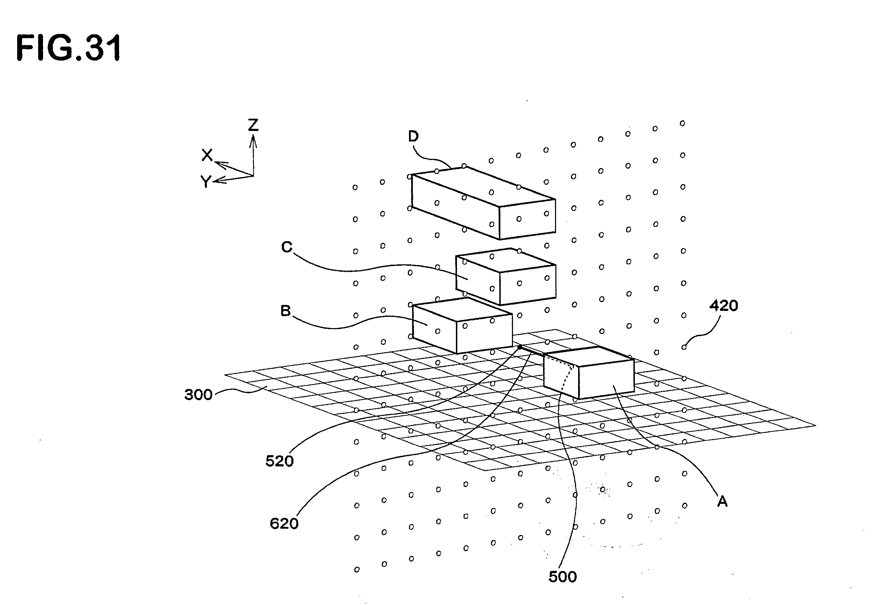

Fig. 31 is a display image showing how an operation plane overlaps into objects in the further embodiment;

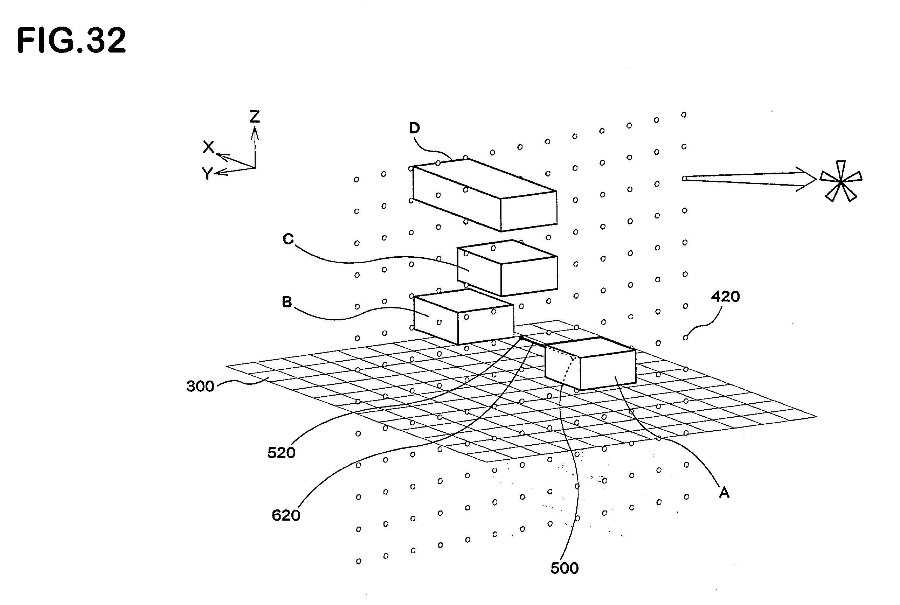

Fig. 32 is a display image showing how an operation plane is comprised of plural floral marks;

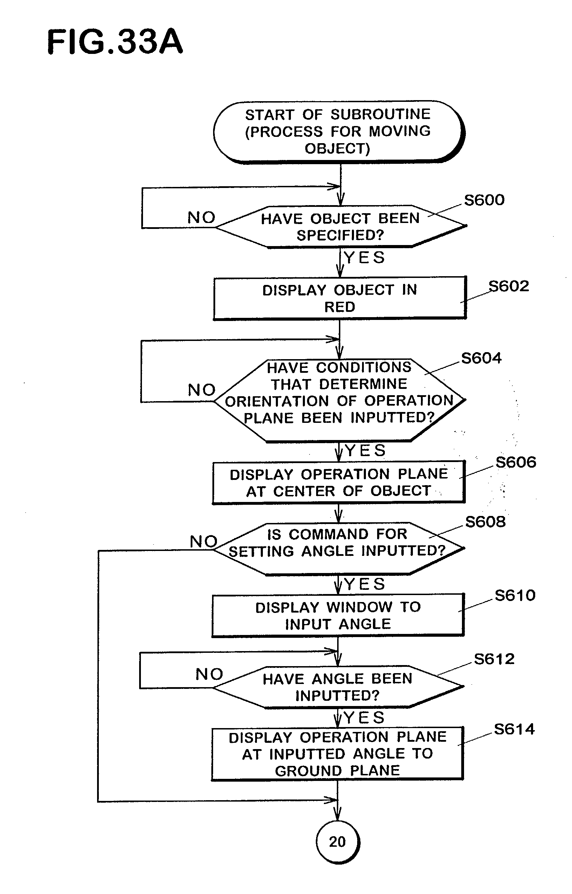

Fig. 33A is a flowchart showing the process for moving an object in the second embodiment;
Fig. 33B is a flowchart showing the process for moving an object in the second embodiment;

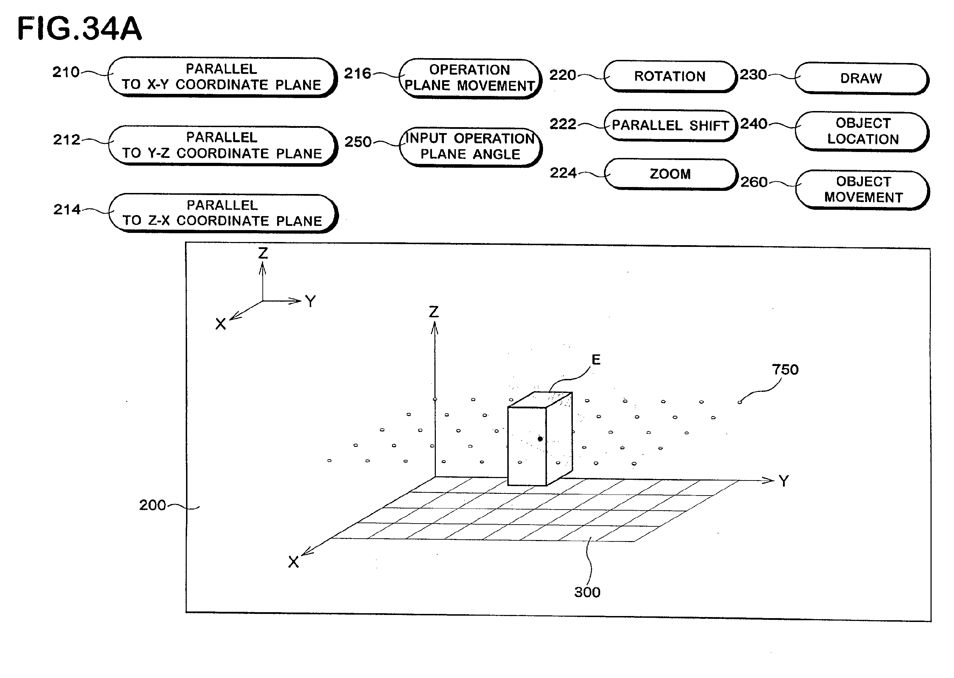

Fig. 34A is a display image showing a layout in which an operation plane 750 is set;

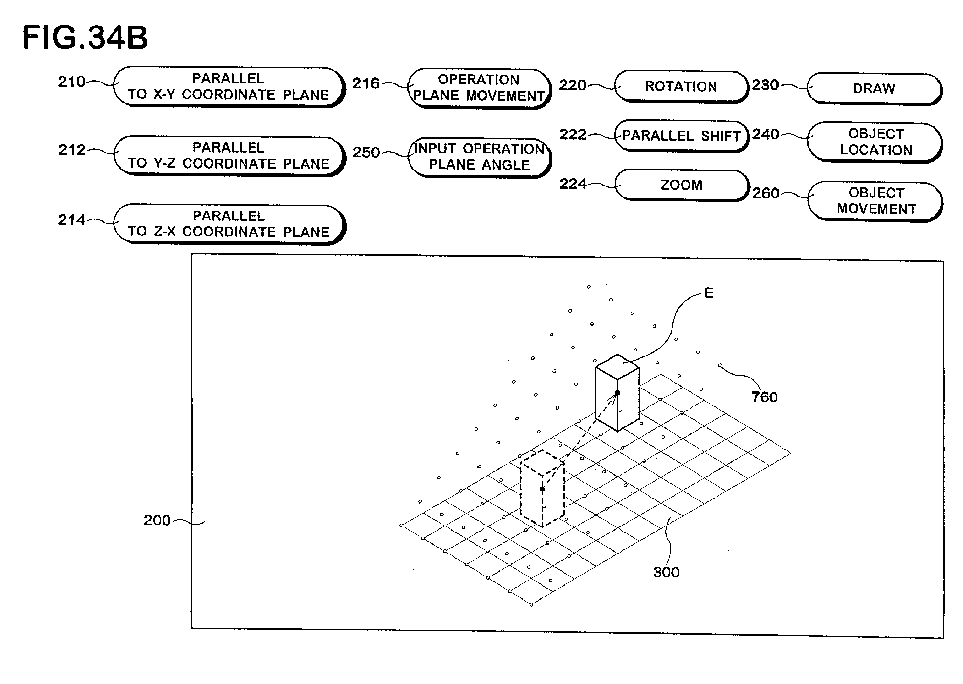

Fig. 34B is a display image showing the process for moving an object on an operation plane;

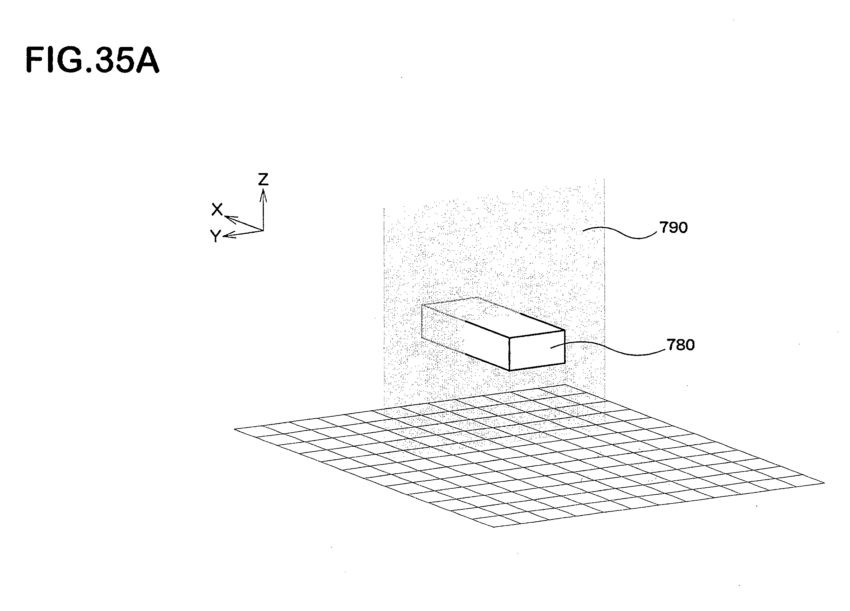

Fig. 35A is a display image showing a semi-transparent operation plane in the further embodiment;

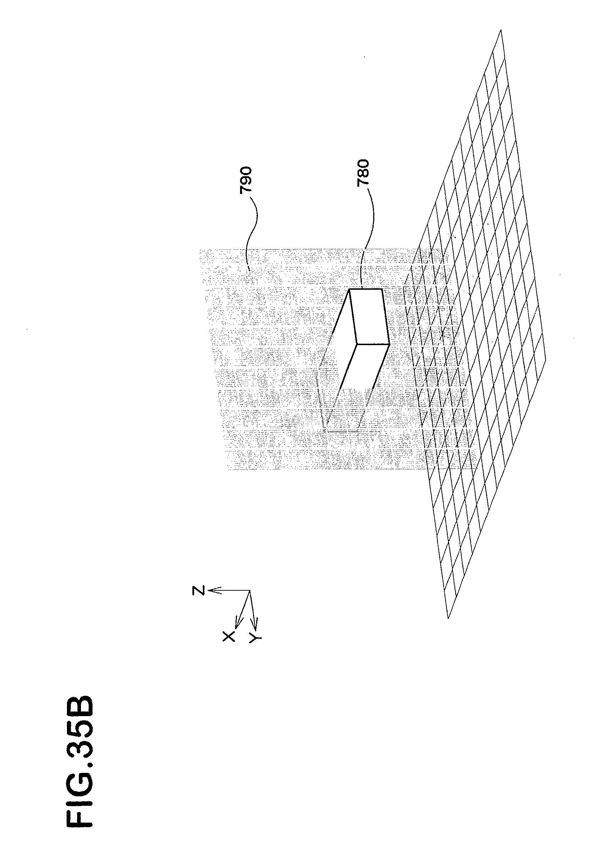

Fig. 35B is a display image showing a semi-transparent operation plane in the further embodiment;
Fig. 36 is an overall display image showing the process performed by prior apparatus.

### Embodiments of invention

### 1. The first embodiment

### 1.1 Functional block diagram

In the first embodiment, a 3-dimensional graphics processing apparatus which draws line segments in order to design harnesses and the like is described.

Fig. 1 shows a functional block diagram illustrating the overall structure of computer aided design apparatus 100 embodying the 3-dimensional graphics processing apparatus. Input Part 102 receives inputted conditions that determine an orientation of an operation plane. Plane generating means 104 generates an operation plane at a starting point position of a line segment that the operator wishes to draw in a virtual 3D space.

Graphic processing means 106 draws line segments on the operation plane between the starting point and an end point inputted by the operator. Operation planes, line segments and the like are displayed on Graphic display part 108.

### 1.2 Hardware structure of CAD apparatus 100

Fig. 2A shows a diagram illustrating a hardware structure of CAD apparatus 100 comprising a CPU that embodies the means and parts shown in Fig. 1. A hard disk 122, a memory 124, a mouse/keyboard 126, a display 128, a flexible disk drive 130 (FDD), a CD-ROM disk drive 132 and the like are connected to a CPU 120.

The hard disk 122 stores a CAD program 140 and an operating system 144 (OS). Disk 122 also stores an object file 142 containing data describing the location and shape of objects A-D described below. The CAD program 140 comprises a module 160 for generating an operation plane, a module 162 for processing graphics, a module 164 for shifting a viewpoint position, and a module 166 for receiving an operator's commands and the like, as shown in Fig. 2B.

The CAD program 140 and the object file 142, for example, are installed onto the hard disk 122 from a CD-ROM 134 through the CD-ROM drive 132, or are downloaded onto the hard disk 122 as a signal through a communication line. The operating system 144 controls the entire system (for example, displaying, inputting and outputting data).

By means of module 166, the CPU 120 obtains conditions that determine an orientation of an operation plane, an end point position of a line segment and the like, and provides those to module 160 and 162. By means of module 160, the CPU 120 performs the "Process for setting initial operation plane", the "Process for setting operation plane" and the "Process for moving operation plane" described below.

By means of Module 164, the CPU 120 performs the "Process for shifting viewpoint position" and the "Process for shifting point of focus" described below, based on data provided by module 166. By means of Module 162, the CPU 120 performs the "Process for drawing a line segment ", the "Process for displaying a line segment momentarily" and the "Process for setting a starting point" described below.

### 1.3 Target drawing

Fig. 3A is a perspective view of a layout that an operator wishes to illustrate in this embodiment. Fig. 3B shows a side view of Fig. 3A projected on the Y-Z coordinate plane. Fig. 3C shows a side view of Fig. 3A projected on the Z-X coordinate plane. As shown in these figures, objects A-D exist in a 3-dimensional space.

In this embodiment, the operator wishes to draw line segments 620, 640, 660 and 680 using CAD apparatus 100 so that they do not touch objects B and C. That is to say, those segments are to pass between objects B and C, and connect one side of object A to the under surface of object D.

### 1.4 Process of CAD apparatus 100

Figs. 4-9 are flow charts showing procedures by which CAD apparatus 100 draws by means of the CAD program line segments 620, 640, 660 and 660 as shown in Fig. 3.

At first, the CPU 120 displays an initial screen shown in Fig. 10 (see step S10 of Fig. 4A). Main area 200 for displaying graphics occupies most of the initial screen. The initial screen also includes button 210 for setting an operation plane parallel to the X-Y coordinate plane, button 212 for setting it parallel to the Y-Z coordinate plane, and button 214 for setting it parallel to the Z-X coordinate plane. The CPU 120 sets the orientation of the operation plane based on the operator's commands using buttons 210, 212 and/or 214.

The screen also includes button 216 for moving the operation plane, rotation button 220 for rotating a viewpoint position, parallel shift button 222 for shifting a viewpoint position parallel to the display 128 surface and zoom button 224. The CPU 120 sets a viewpoint position in the main area 200 based on the operator's commands using buttons 220, 222 and/or 224. The screen also includes the draw button 230 for drawing line segments and the like and a location button 240 for locating objects.

The CPU 120 displays an initial graphic 310 for guidance and sets a ground plane 300 parallel to the X-Y coordinate plane in the main area 200. The ground plane 300 is gridded and identifies an orientation of the X-Y coordinate plane in a virtual 3D space. The initial graphic 310 is a perspective view of a cube comprising a top surface and an under surface parallel to the ground plane 300, and the center of the cube is located on the plane 300.

The operator clicks the location button 240 using the mouse 126 to locate objects A-D in the virtual 3D space in which the ground plane 300 is defined. In response to the command, the CPU 120 reads the data describing the location and shape of each object A-D from the object file 142 shown in Fig. 11. The CPU 120 then locates objects A-D in the virtual 3D space (see step S12 of Fig. 4A), as shown in Fig. 12. For simplicity, the initial graphic 310 for guidance is not shown in Fig. 12 and the figures that follow [fig.12-25].

The operator clicks button 210 in order to input the "Command for setting initial operation plane" to draw line segment 620 shown in Fig. 3A (see step S14 of Fig. 4A). As described above, the button 210 is clicked in order to set an initial operation plane (an operation plane 400) parallel to the X-Y coordinate plane. In response to the command, the CPU 120 performs the "Process for setting initial operation plane" as shown in Fig. 5A (see step S14 of Fig. 4A).

The CPU 120 sets an operation plane 400 passing through the center of initial graphic 310, as shown in Fig. 13. As at first the ground plane 300 also passes through the center of the graphic 310, the ground plane 300 and the operation plane 400 overlap (see Fig. 13). The CPU 120 displays the operation plane 400 by assigning the mark (○) at each point on the X-Y coordinate plane.

The operator clicks button 216 in order to input the "Command for moving operation plane" to move the operation plane 400 so that it passes through a starting point 500 of a line segment that the operator wishes to draw (see step S20 of Fig. 4A). The operator inputs the command by clicking button 216, and dragging the operation plane 400 using the mouse 126. In response to the command, the CPU 120 performs the "Process for moving operation plane" in Fig. 6A (see step S22 of Fig. 4A).

In this process, the CPU 120 obtains tracking and position data from the mouse 126, and moves the operation plane 400 without changing the angle of the plane. That is to say, the plane 400 is moved parallel to the ground plane 300. Fig. 14A shows the layout after the operation plane 400 has been moved. Hereinafter, in this example, the moved operation plane is referred to as an operation plane 410. Fig. 14B shows the layout projected on the Z-X coordinate plane.

The operator clicks the draw button 230 and an appropriate position on the side of object A in order to input the "Command for setting a starting point of line segment". The position is located on a cross-line between the side of object A and the operation plane 410 (see step S20 of Fig. 4A). In response to the command, the CPU 120 performs the "Process for setting a starting point" in Fig. 7 (see step S26 of Fig. 4A).

In this process, the CPU 120 obtains a position specified as a starting point of the line segment. The CPU 120 changes the color of the starting point 500 from white to blue (see step S260, S264 of Fig. 7). Moreover, the CPU 120 sets the starting point 500 as a point of focus. That is to say, the display image is arranged so that the point 500 is located at the center of the main area 200.

The "Command for shifting viewpoint position" rotates the current view of the objects and operation plane clockwise approximate 90 degrees from the view shown in Fig. 14A. The operator inputs the command by clicking the rotation button 220, and drags a viewpoint position using the mouse 126 (see step S28 of Fig. 4B). In response to the command, the CPU 120 performs the "Process for shifting viewpoint position" in Fig. 9 (see step S38 of Fig. 4B).

In this process, the CPU 120 shifts the viewpoint position based on tracking and position data from the mouse 126 according to the selected method for shifting the viewpoint position. The CPU 120 then displays the current layout shown in Fig. 15 (see step S380-S384 of Fig. 9). The operator selects the method by clicking the rotation button 220.

If the operator wishes to draw a line segment 620 (see Fig. 3A), the operator moves an end point 520 with the mouse cursor (see step S28 of Fig. 4B: Command for displaying a line segment momentarily). In response to the command, the CPU 120 performs the "Process for displaying a line segment momentarily" in Fig. 6B (see step S34 of Fig. 4B).

In this process, the CPU 120 continuously obtains a position of the mouse cursor, and displays a line segment 630 in white based on the position of the mouse cursor and that of the starting point 500, as shown in Fig. 16 (see step S340, S342 of Fig. 6B).

The operator clicks an appropriate position in order to input the command to draw a line segment 620. In this example, the end point is located between objects A and B (see step S28 of Fig. 4B: Command for drawing a line segment). In response to the command, the CPU 120 performs the "Process for drawing a line segment " in Fig. 8 (see step S30 of Fig. 4B).

In this process, the CPU 120 obtains the position specified as an end point of a line segment. The CPU120 sets an end point 520 in blue, and draws a line segment 620 in blue (see step S300, S304 of Fig. 8), as shown in Fig. 17. Moreover, the CPU 120 sets the end point 520 as the point of focus, and sets the point 520 as a starting point for the next line segment 640 (see step S306, S308 of Fig. 8).

The operator inputs the "Command for shifting viewpoint position" which rotates the current view slightly counterclockwise from the view shown in Fig. 17. Furthermore, the operator inputs the command to roll down. In response to the command, the CPU 120 performs the "Process for shifting viewpoint position" in Fig. 9 (see step S38 of Fig. 4B). Fig.18 shows the layout after having shifted the viewpoint position.

The operator clicks button 212 to set an operation plane parallel to the Y-Z coordinate plane (see step S28 of Fig. 4B: Command for setting operation plane). In response to the command, the CPU 120 performs the "Process for setting operation plane" in Fig. 5B (see step S32 of Fig. 4B).

In this process, the CPU 120 obtains inputted conditions that determine an orientation of the operation plane. The CPU 120 then displays an operation plane 420 at the position of the starting point 520 parallel to the Y-Z coordinate plane, instead of the operation plane 410 (see step S320, S324 of Fig. 5B). Fig. 19A shows the layout after having set the operation plane 420. Fig. 19B shows the layout projected on the Z-X coordinate plane. The CPU 120 displays the operation plane 420 by assigning the mark (○) at each point on the Y-Z coordinate plane.

The operator can recognize the relative position of the next line segment and object C by means of the operation plane 420, by moving new end point with the mouse cursor (see step S28 of Fig. 4B: Command for displaying a line segment momentarily). In this process, the CPU 120 continuously obtains the position of the mouse cursor, and displays a line segment in white based on the position of the mouse cursor and the starting point 520 (see step S34 of Fig. 4B: Process for displaying a line segment momentarily).

The operator clicks an appropriate position on the operation plane 420 (see step S28 of Fig. 4B: Command for drawing a line segment). In response to the command, the CPU 120 sets the selected position as an end point 540 on the operation plane 420, and draws a line segment 640 shown in Fig. 20 (see step S30 of Fig. 4B: "Process for drawing a line segment"). As described above, the CPU 120 sets the end point 540 as the point of focus, and sets the point 540 as a starting point for the next line segment 660 (see step S306, S308 of Fig. 8).

The operator inputs the "Command for shifting viewpoint position" which rotates the current view clockwise approximate 90 degrees from the view shown in Fig. 20. Furthermore, the operator inputs the command to roll down. In response to the command, the CPU 120 performs the "Process for shifting viewpoint position" in Fig. 9 (see step S38 of Fig. 4B). Fig. 21 shows the layout after having shifted the viewpoint position.

The operator clicks the button 210 to set an operation plane parallel to the X-Y coordinate plane (see step S28 of Fig. 4B: Command for setting operation plane). In response to the command, the CPU 120 displays an operation plane 430 at the position of a starting point 540 parallel to the X-Y coordinate plane, instead of the operation plane 420 (see step S32 of Fig. 4B: Process for setting operation plane). Fig. 22A shows the layout after having set the operation plane 430. Fig. 22B shows the layout projected on the Z-X coordinate plane.

The operator considers where line segments should be drawn in the future, moving an end point on the operation plane 430 with the mouse cursor. The operator can then recognize the relative positional relationship between the line segment, object B and object C by means of the operation plane 430. In this process, the CPU 120 obtains position data from the mouse 126, and displays a line segment in white based on the position and the starting point 540 (see step S34 of Fig. 4B: Process for displaying a line segment momentarily).

The operator clicks an appropriate position on the operation plane 430 (see step S28 of Fig. 4B: Command for drawing a line segment). The operator determines the position so that line segment (680) drawn in the future will not touch object C and the end point may be set on the under surface of object D. In response to the command, the CPU 120 draws an end point 560 and a line segment 660 in blue on the operation plane 430, as shown in Fig. 23 (see step S30 of Fig. 4B: Process for drawing a line segment). As described above, the CPU 120 sets the end point 560 as the point of focus, and sets the end point 560 of the line segment 660 as a starting point for the next line segment 680 (see step S306, S308 of Fig. 8).

The operator clicks the button 214 to set an operation plane parallel to the Z-X coordinate plane (see step S28 of Fig. 4B: Command for setting operation plane). In response to the command, the CPU 120 displays an operation plane 440 at the starting point position 560 parallel to the Y-Z coordinate plane. The CPU 120 displays the operation plane 440 instead of the operation plane 430 (see step S32 of Fig. 4B: Process for setting operation plane). Fig. 24A shows the layout after having set the operation plane 440. Fig. 24B shows the layout projected on the Z-X coordinate plane.

The operator clicks an appropriate position on a cross-line between the operation plane 440 and the under surface of object D (see step S28 of Fig. 4B: Command for drawing a line segment). In response to the command, the CPU 120 draws an end point 580 and a line segment 680 in blue, as shown in Fig. 25 (see step S30 of Fig. 4B: Process for drawing a line segment).

The operator inputs the "Command for shifting viewpoint position" to check a completed layout from several desired viewpoints (see step S28 of Fig. 4B). In response to the command, the CPU 120 displays the layout from viewpoints commanded by the operator (see step S38 of Fig. 4B: Process for shifting viewpoint position). The operator checks the relative positional relationship between drawn line segments 620, 640, 660, 680 and objects A-D, and then inputs an end drawing command.

In step S14, S20 of Fig. 4A, if the "Command for shifting viewpoint position" is inputted, the CPU 120 performs the "Process for shifting viewpoint position" (see step S16 of Fig. 4A, Fig. 9). In step S28 of Fig. 4B, if the "Command for moving the operation plane" is inputted, the CPU 120 performs the "Process for moving operation plane" (see step S36 of Fig. 4B).

### 1.5 Other Processes in this embodiment

### (1) Orientation of operation plane

In the embodiment described above, the initial screen includes button 210, 212 and 214 to input conditions that determine the orientation of the operation plane. The CPU 120 determines the orientation based on the operator's commands using buttons 210, 212, 214. However, the CPU 120 may display various orientations of operation planes based on positions defined by a mouse and a starting point position (in other embodiment, the position can be any point of line segment). In that case, the CPU 120 determines an orientation of the operation plane in response to the operator's command. In other words, the operator drags an operation plane which includes the starting point, and then specifies an orientation of the operation plane by clicking.

In the embodiment described above, the CPU 120 sets an operation plane parallel to the X-Y, Y-Z or Z-X coordinate plane. However, the present invention is not limited to these orientations, the CPU 120 may set an operation plane in any orientation or parallel to any plane. In that case, preferably, the CPU 120 displays a digital angle value of operation plane.

### (2) Set position of operation plane

In the embodiment described above, the CPU 120 sets an operation plane at a starting point position of a line segment (in other words, at an end point position of the segment drawn just before). However, the present invention is not limited to the position. For example, the CPU 120 may set an operation plane at a starting point, middle point or any point (for example, the point specified by the operator) on the line segment drawn just before.

The CPU 120 may set the line segment drawn just before as a reference line, and set an operation plane based on the reference line. For example, under the situation shown in Fig. 26, the CPU 120 displays plural orientations of the operation plane based on position data from the mouse and the reference line 702. In other words, plural operation planes corresponding to positions defined by the mouse are generated (for example, operation planes 704, 706). The operator inputs a command for selecting from the operation planes. The CPU 120 sets an operation plane in response to the command. In that case, the present invention is not limited to set the line segment drawn just before, the CPU 120 may set any line segment drawn before then as the reference line.

The CPU 120 may set any point in an object (for example, the center of the object) or on the surface of an object as a reference point, and then may set an operation plane based on the reference point. The CPU 120 may set any line in an object or on the surface of an object (for example, a line specified by the operator) as a reference line, and then may set an operation plane based on the reference line. The CPU 120 may set any point as the reference point, even if the point is spaced apart from the drawn line segment (or object). The CPU 120 may set any line as the reference line, even if the line is spaced apart from the drawn line segment (or object). For example, a line parallel to the drawn line segment may be set as the reference line.

### (3) Display operation plane

In the embodiment described above, in response to an operator's command to set an operation plane, the CPU 120 displays an operation plane, instead of an operation plane displayed just before. In other words, at the same time of deleting the previously displayed operation plane, the CPU 120 generates a new operation plane. However, the CPU 120 may continue displaying the previous operation plane, even when displaying the new operation plane. In that case, the CPU 120 displays several operation planes at the same time.

### (4) Set operation plane

In the embodiment described above, the CPU 120 sets an operation plane based on a position and the conditions inputted by the operator, that is conditions that determine an orientation of the operation plane (parallel to the X-Y, Y-Z or Z-X coordinate plane). However, the present invention is not limited to these conditions. For example, on the basis of three 3D coordinate values inputted by the operator, the CPU 120 may set an orientation plane. The CPU 120 may set it based on a starting point of line segment and two 3D coordinate values (for example, X and Y-coordinate values) inputted by the operator. The CPU 120 may set it based on one 3D coordinate value (for example, X-coordinate value) and any plane (for example, X-Y, Y-Z or Z-X coordinate plane).

The CPU 120 may set and move an operation plane, according to procedures shown in the flow chart of Fig. 27. The CPU 120 displays rotation axes 710 to rotate an operation plane 712, as shown in Fig. 28A (see step S400 of Fig. 27). The rotation axes 710 comprise an x-axis, y-axis and z-axis. The CPU 120 demands that the operator select an axis and input an angle of rotation. In response to operator's command, the CPU 120 rotates the operation plane around the selected axis by the inputted angle, and then displays the rotated operation plane (see step S402, S404, S406 of Fig. 27). For example, when the operator selects the z-axis as the rotation axis, the CPU 120 rotates the operation plane, as shown in Fig. 28B. Alternatively, the CPU 120 may not display the rotation axes 710. In that case, the CPU 120 rotates the operation plane in response to the operator's rotation command and positions defined by the mouse. For example, the operator clicks a button for rotating the operation plane, and then drags the operation plane on the basis of a rotation axis.

### (5) Process for shifting the point of focus

In the embodiment described above, immediately after drawing a line segment in the "Process for drawing a line segment (see step S30 of Fig. 4B)", the CPU 120 performs the process for shifting a point of focus (see step S304, S306 of Fig. 8). However, the CPU 120 may not perform the process for shifting a point of focus. Alternatively, The CPU 120 may perform the process in response to the operator's command.

### (6) Movement of operation plane

The CPU 120 may move an operation plane so that an end point of a line segment drawn just before is located at the center of the operation plane. If the operation plane is small compared with the main area 200 (an area for displaying a layout), an operator can recognize the overall layout easily.

For example, under the situation that a line segment 718 is drawn as shown in the Fig. 29, the CPU 120 draws an end point 724 and a line segment 720. The CPU 120 displays an operation plane 728 whose center is located at the end point 724 position, instead of an operation plane 726 whose center is located at an end point 722 position. In other words, the CPU 120 changes the operation plane 726 to the plane 728 (moves the operation plane) at the same time as drawing the line segment 720. Alternatively, the CPU 120 may set the center of the operation plane as the point of focus at the same time as moving the operation plane.

### (7) Process for shifting viewpoint position automatically

In the embodiment described above, on one hand the CPU 120 performs the "Process for shifting viewpoint position" in response to the operator's command, and on the other it automatically performs the process for shifting the point of focus (see step S306 of Fig. 8). However, the CPU 120 may shift the viewpoint position automatically on the basis of an operation plane, moving the operation plane every time (see step S322-S326 of Fig. 5B). For example, the CPU 120 may switch to a viewpoint perpendicular to the operation plane.

The CPU 120 may switch to a viewpoint perpendicular to the operation plane when shifting the point of focus. In that case, it does not need the operator's command for shifting the viewpoint position, and enables an operation of viewing to be simple.

In the embodiment described above, the CAD apparatus 100 performs the "Process for shifting viewpoint position" (see step S16, S24 and S38 of Fig. 4B). However, the apparatus 100 may not perform the process.

### (8) Command for shifting viewpoint position

In the embodiment described above, the CAD apparatus 100 displays a screen including the rotation button 220, the parallel shift button 222 and the zoom button 224. The operator inputs the "Command for shifting viewpoint position" by clicking buttons 220, 222, 224, and shifts a viewpoint position using the mouse 126. However, the apparatus 100 may comprise the means to obtain an angle of rotation, a distance of parallel shift or a distance between a viewpoint and the point of focus.

In the embodiment described above, a screen including the rotation button 220 is displayed, and the operator inputs the command for rotating a viewpoint position by clicking the button 220. However, the CPU 120 may rotate a viewpoint position based on tracking and position data from the mouse 126, only when the operator presses a predetermined key on the keyboard 126.

### (9) Command for drawing a line segment

In the embodiment described above, the CPU 120 draws a line segment as an example of an object graphic. Accordingly, the graphic is drawn on the basis of a starting point position defined by the mouse 126. However, the present invention is not limited to graphics drawn from the starting point, and the object graphic may be drawn on the basis of mouse tracking on the operation plane in response to the operator's command.

### (10) Object graphic

In the embodiment described above, the CPU 120 draws a line segment as an example of an object graphic. However, the present invention is not limited to a line segment, and the CPU 120 may draw any plane figure as the object graphic (for example, a figure in the shape "S"). For example, when a figure in the shape "S" is drawn, the CPU 120 sets an operation plane based on any point or an end point on the figure "S".

The present invention is not limited to the layout described above (see Fig. 3), and any 3D graphic or layout may drawn. For example, when a column is drawn as an object graphic, the CPU 120 sets an operation plane based on any point on the column (for example, any point on the side, top or under surface of the column) or in the column.

### (11) Process for locating objects

In the embodiment described above, the CPU 120 reads the data describing the location and shape of each object A-D from the object file 142, and then locates objects A-D in the virtual 3D space (see step S12 of Fig. 4A). However, the CPU 120 may locate the objects at positions specified by the operator.

Fig. 30 is a flow chart showing procedures that the CAD apparatus 100 performs as a process for locating objects using the initial graphic 310 for guidance as a cursor for locating objects. The CPU 120 reads the shape data of the object selected from the object file 142, and then locates the object at the center of the initial graphic 310 (see step S500, S502 of Fig. 30). The operator inputs the command for locating the object, and then specifies the object which the operator wishes to move using the mouse 126 (see step S504, S506 of Fig. 30). In response to the command, the CPU 120 obtains tracking and position data from the mouse 126, and then moves the object to a position defined by the mouse 126 (see step S508, S510 of Fig. 30). Alternatively, the CPU 120 may obtain coordinate values inputted as location data.

### (12) Operation plane

In the embodiment described above, the CPU 120 displays an operation plane by assigning the mark (○) at each point on the X-Y, Y-Z or Z-X coordinate plane. For example, as each mark is set at each point corresponding to each Z-X coordinate value, an operation parallel to the Z-X coordinate plane is set. However, the present invention is not limited to marks, and the CPU 120 may display the operation plane by giving uniform color to a plane. Preferably, the CPU 120 gives transparent color to the operation plane so that an operator can see through the plane to view objects, line segments and the like behind the plane. Alternatively, the operation plane may be gridded on the surface just as the ground plane 300.

Preferably, the CPU 120 displays an operation plane having no thickness. In that case, for example, when the operation plane is set in parallel to the Z-X coordinate plane, it is displayed as a thin line from a view perpendicular to the Y-Z coordinate plane, or it is not displayed from the view. This operation plane enables a visual field to be unhindered as far as possible.

The operation plane is not limited to be a plane, and it may be a curved surface determined by a curvature radius. In that case, preferably, the CPU 120 draws the shortest curved line between a starting point and an end point on the curved surface when the operator specifies the end point position on the curved surface. Depending on the drawing figure, the curved surface is more useful than a plane as the operation plane, because the operator can command drawing a curved line easily compared with a plane. Alternatively, the CAD apparatus 100 may comprise a database which stores data of the operation plane (for example, a curvature radius, a size data). In that case, the CPU 120 may set an operation plane by reading the data in the database.

In the embodiment described above, the CPU 120 does not display the part of an operation plane contained in objects A-D. However, the CPU 120 may display this part. For example, Fig. 31 shows a layout when the CPU 120 displays the part contained in objects C and D under the situation in Fig. 19A. Alternatively, the CPU 120 may display this part in color differed from the other part of the operation plane.

The present invention is not limited to the pattern (○) of an operation plane, the CPU 120 may display another pattern (for example, ×,□). Fig. 32 shows a pattern comprised of plural floral marks as an example. Alternatively, the CPU 120 may change the pattern in response to the operator's command.

### (13) Location and orientation data of operation plane

The CPU 120 may store the location and orientation data of operation planes generated in a sequential process in the memory 124, hard disk 122 or the like. Accordingly, the CPU 120 can speedily display the operation plane generated previously. For example, this is useful when amending a line segment, because the operation plane used at the time of drawing the segment is displayed immediately.

### (14) Process upon an object graphic

In the embodiment described above, as an example of a process upon an object graphic, the CPU 120 sets an end point of line segment drawn just before as a starting point for the next line segment, and then draws the next line segment based on the starting point. However, the present invention is not limited to this process, and the CPU 120 may transform a shape of the object graphic as a process upon an object graphic. For example, the CPU 120 may transform a length or an orientation of a line segment drawn just before.

### (15) Process for calculating length of line segment

Module 162 for processing graphics may calculate an overall length of drawn line segment in response to the operator's calculation command. Module 162 may calculate a length of a line segment specified by the operator (in other words, a specified part of a drawn line segment).

### (16) Ground plane 300

In the embodiment described above, the ground plane 300 is parallel to the X-Y coordinate plane, but it may be parallel to the Y-Z or Z-X coordinate plane. In the embodiment described above, the plane 300 is gridded on the surface, but it may be an assembly comprised of a plurality of evenly spaced dots, or a plane of uniform color. Alternatively, the CPU 120 may not display the plane 300 in the virtual 3D space.

### (17) Process for setting initial operation plane

In the embodiment described above, the CPU 120 locates an initial operation plane 400 at the center of the initial graphic 310 for guidance (see step S182-S186 of Fig. 5A). However, the present invention is not limited to this, and the CPU 120 may locate the plane 400 at a position specified by the operator, or at a predetermined position. The CPU 120 may set the plane 400 at a predetermined position at the same time as displaying the initial screen.

### (18) Drawing position of line segment

In the embodiment described above, the CPU 120 draws a line segment on an operation plane. However, the CPU 120 may draw it in a direction perpendicular or parallel to the operation plane.

### (19) Virtual 3D space

In the embodiment described above, the CAD apparatus 100 performs graphics process in the virtual 3D space represented by a Cartesian X-Y-Z coordinate system. However, the apparatus 100 may perform the process in a virtual 3D space represented by a polar coordinate system. Alternatively, the respective direction of the X-axis, Y-axis or Z-axis of the Cartesian X-Y-Z coordinate system need not be limited to the direction shown in Figures 3-25. (20) Connection or assembly of part drawings

In the embodiment described above, as an example of a process upon an object graphic, the CPU 120 performs a process for drawing line segments by connecting each segment. However, the CPU 120 may store previously a part file containing location and shape data of parts, and it then may locate part drawings in the virtual 3D space by reading the part file. Accordingly, the present invention is useful to for the connection or assembly of part drawings. By means of an operation plane, the operator can recognize the relative positional relationship between a part drawing and the other graphics in the virtual 3D space. The operator then can also recognize a depth of the virtual 3D space easily. Especially, it is useful to design a pipe arrangement.

The CPU 120 may perform both a process for connecting (or assembling) part drawings and a drawing process (for example, a process for drawing a line segment). For example, in the case of designing harnesses, the CPU 120 may locate connectors at appropriate positions by reading the part file that contains location and shape data of the connectors. The CPU 120 then sets the connector as a starting point of a line segment, and performs the "Process for drawing a line segment", and the "Process for setting operation plane" described above.

### (21) Application of present invention

Application of the present invention is not limited to the design of harnesses or pipe arrangements. For example, it is possible to apply the invention to design of a product line.

In the embodiment described above, the CAD apparatus 100 layouts the design of harnesses so that line segments (harnesses) do not touch objects (objects B and C). However, the layout may be such that the line segments pass through the objects. The apparatus 100 may draw line segments along the surface of an object. The apparatus 100 may draw line segments at a plane or a line spaced apart from a surface of an object by a predetermined distance.

### (22) Color of line segment

In the embodiment described above, the CPU 120 draws a line segment in white when an end point position of the segment is not determined, and changes the color of the segment to blue when it is determined. However, the present invention is not limited to these colors.

### 2. The second embodiment

The process performed by a 3-dimensional graphics processing apparatus for moving an object along a surface of an operation plane. The CAD apparatus 100 in this embodiment comprises hardware similar to that of the apparatus 100 in the first embodiment. In the first embodiment, the CPU 120 sets an operation plane parallel to the X-Y, Y-Z or Z-X coordinate plane. On the contrary, in this embodiment, the apparatus 100 sets it furthermore based on an inputted angle to the ground plane 300.

Fig. 33A-B are flow charts showing procedures that the CPU 120 performs by means of CAD program 140. Under the situation that object E is located in the virtual 3D space (see Fig. 34A), the operator inputs the command for specifying object E with the mouse 126 (see step S600 of Fig. 33A). In response to the command, the CPU 120 displays the specified object E in red (see step S602 of Fig. 33A).

The operator clicks the buttons 210, 212 or 214 for setting an operation plane. Assume that button 210 is clicked in this embodiment. In response to the command, the CPU 120 sets an operation plane at the center of the object E, parallel to the X-Y coordinate plane (see step S606 of Fig. 33A).

The operator clicks a button 250 for setting an angle of the operation plane to the ground plane 300 (see step S608 of Fig. 33A). In response to the command, the CPU 120 displays a window to input the angle (see step S610 of Fig. 33A).

The operator inputs the angle which he wishes (see step S612 of Fig. 33A). It is assumed that 30 degrees is inputted in this embodiment. The CPU 120 obtains the inputted angle, and then displays the operation plane 760 at the angle of 30 degrees to the plane 300, as shown in Fig. 34B (see step S614 of Fig. 33A).

The operator inputs a command for moving object E by clicking a button 260 for moving an object, and then specifies object E by clicking it with the mouse 126 (see step S616, S618 of Fig. 33B). In response to the command, the CPU 120 displays object E in blue (see step S620 of Fig. 33B).

The operator clicks a target position to which the operator wishes to move object E. The CPU 120 obtains the position (see step S622 of Fig. 33B), and then moves object E to the position with the center of object E passing through the operation plane 760 (see step S624 of Fig. 33B). Accordingly, the center of object E is located at the target position on the operation plane 760.

Therefore, an object can be moved to an accurate position by means of the operation plane, even if it is difficult to recognize a depth in the virtual 3D space. The present invention is useful for drawing connecting objects (for example, connection of a male connector and a female socket).

In this embodiment, the CPU 120 moves object E by obtaining the target position on the operation plane 760 specified by the operator. However, the CPU 120 may move object E along the surface of the plane 760 by obtaining movement trajectory data from the mouse 126, defining the trajectory being between the initial position and the target position.

In this embodiment, the CPU 120 determines the orientation of the operation plane by obtaining the inputted angle to the ground plane 300. However, the CPU 120 may determine the orientation based on tracking and position data from the mouse 126. In other words, the operator may drag object E on the operation plane.

In this embodiment, the CAD apparatus 100 determines the target position based on the position on the operation plane clicked with the mouse 126. However, the apparatus 100 may determine the target position based on a movement distance value or a distance value in the direction of a specified coordinate axis (for example, a distance value in the direction of the X-axis).

In this embodiment, the CPU 120 sets an operation plane at the center of object E. However, the CPU 120 may set an operation plane on the basis of any point or line in object E. It may set an operation plane on the basis of any surface of object E. For example, if the operator specifies the under surface of the object, the CPU 120 sets an operation plane close against the surface, and then moves the object along the surface in response to operator's command.

In this embodiment, the CPU 120 determines the orientation of an operation plane based on inputted angle to ground plane 300. However, the CPU 120 may determine the orientation based on inputted angles to each X-axis, Y-axis and Z-axis.

In this embodiment the ground plane 300 is displayed in main area 200, but the plane 300 may be not displayed. In this case, for example, the CPU 120 can determine an orientation of the operation plane based on an inputted angle to the X-Y coordinate plane.

In the first and second embodiment described above, the CPU 120 displays an operation plane by assigning the mark (○). However, the operation plane may be semi-transparent plane shown in Fig. 35A. Accordingly, an operator can see through the operation plane to view objects, line segments and the like behind the plane. This operation plane enables a visual field to be unhindered. In case the operation plane 780 and an object 790 cross (see Fig. 35A), the operator can recognize the part in the object 790 front side of the plane 780 (or the part in the object 790 behind the plane 780).

In that case, the operator can recognize the relative positional relationship between the object 790 and the operation plane 780 because of a clear cross-line between the object 790 and the plane 780. Preferably, the CPU 120 may display the operation plane having no thickness. Moreover, the operation plane may be gridded on the surface as shown in Fig. 35B.

## Claims

1. A 3-dimensional graphics processing apparatus comprising: an input part for receiving inputted information; a graphic display part for displaying graphics; and a processing part for performing a graphic process in a virtual 3D space,
wherein the processing part comprises: a plane generating means (S18, S22, S32, S36, S606, S614) operable to generate a process plane (400, 410, 420, 430, 440, 750, 760) in the virtual 3D space based on a reference point or a reference line whose location is determined by an object graphic (620, 640, 660, 680); and a graphics processing means (S26, S30, S624) operable to perform a process upon the object graphic on the basis of the process plane in response to inputted information.

2. The apparatus according to claim 1, wherein the object graphic includes plural graphics, the plane generating means generates a process plane based on a graphics drawn previously, and the graphics processing means draws a next graphic on the basis of the process plane

3. The apparatus according to claim 2, wherein the reference point is an end point or a starting point of the graphic drawn just before.

4. The apparatus according to claim 1, wherein the object graphic is selected from graphics stored previously and then is located in the virtual 3D space.

5. The apparatus according to any one of claims 1 to 4, wherein the graphics processing means sets the end point of the object graphic as a starting point of a new graphic and then draws the new graphic based on the starting point, as the process upon the object graphic.

6. The apparatus according to any one of claims 1 to 4, wherein the graphics processing means moves or transforms the object graphic on the basis of the process plane, as the process upon the object graphic

7. The apparatus according to any one of claims 1 to 6, wherein the plane generating means generates the process plane based on inputted orientation information for a process plane.

8. The apparatus according to any one of claims 1 to 7, wherein the reference point is selected in the object graphic or on the surface of the object graphic.

9. The apparatus according to any one of claims 1 to 8, wherein the processing part displays a ground plane parallel to an X-Y, Y-Z or Z-X coordinate plane in the virtual 3D space on the graphic display part.

10. The apparatus according to any one of claims 7 to 9, wherein the plane generating means generates the process plane parallel to an X-Y, Y-Z or Z-X coordinate plane based on the orientation information for the process plane.

11. The apparatus according to any one of claims 1 to 10, wherein the graphics processing means obtains an inputted drawing position on the process plane, and then draws graphics on the process plane based on the drawing position.

12. The apparatus according to any one of claims 1 to 11, wherein the graphics processing means connects or assembles graphics to be processed and graphics existing in the virtual 3D space.

13. The apparatus according to any one of claims 1 to 12, wherein the plane generating means moves the process plane in response to inputted information.

14. The apparatus according to any one of claims 1 to 13, wherein the processing part displays graphics on the graphic display part by shifting a viewpoint position.

15. The apparatus according to claim 14, wherein the processing part displays the process plane at the center of the display screen of the graphic display part every time the processing part performs the process upon the object graphic.

16. The apparatus according to claim 14 or 15, wherein the processing part displays graphics on the graphic display part from a view perpendicular to the process plane generated by the plane generating means.

17. The apparatus according to any one of claims 1 to 16, wherein the processing part displays an initial graphic for setting the process plane initially in the virtual 3D space on the graphic display part, and then the plane generating means generates the process plane on the basis of the initial graphic.

18. The apparatus according to any one of claims 1 to 17, wherein the process plane is an assembly comprised of plural dots or lines located on a flat plane.

19. The apparatus according to any one of claims 1 to 17, wherein the process plane is an assembly comprised of plural dots or lines located in the shape of a curved surface with a curvature radius.

20. The apparatus according to claim 5, wherein the graphics processing means draws a line segment or draws plural connected line segments.

21. The apparatus according to claim 20, wherein the graphics processing means calculates an overall length of a drawn line segment or a length of a line segment.

22. The apparatus according to claim 9, wherein the ground plane is an assembly comprised of a plurality of equally spaced dots or lines.

23. The apparatus according to any one of claims 1 to 22, wherein the process plane is semi-transparent so that an operator can see through the process plane to view graphics behind the process plane.

24. A control program realizing a 3-dimensional graphics processing apparatus with a computer, the apparatus comprising: an input part for receiving inputted information; and a graphic display part for displaying graphics, the program comprising the steps of:
generating (S18, S22, S32, S36, S606, S614) a process plane (400, 410, 420, 430, 440, 750, 760) in the virtual 3D space based on a reference point or a reference line whose location is determined by an object graphic (620, 640, 660,680); and
performing (S26, S30, S624) a process upon the object graphic on the basis of the process plane in response to inputted information.

25. The program according to claim 24, wherein the object graphic includes plural graphics, the plane generating means generates a process plane based on a graphics drawn previously, and the graphics processing means draws a next graphic on the basis of the process plane.

26. The program according to claim 25, wherein the reference point is an end point or a starting point of the graphic drawn just before.

27. The program according to claim 24, wherein the object graphic is selected from graphics stored previously and then is located in the virtual 3D space.

28. The program according to any one of claims 24 to 27, wherein the graphic process performing step sets the end point of the object graphic as a starting point of a new graphic and then draws the new graphic based on the starting point, as the process upon the object graphic.

29. The program according to any one of claims 24 to 27, wherein the graphic process performing step moves or transforms the object graphic on the basis of the process plane, as the process upon the object graphic.

30. The program according to any one of claims 24 to 29, wherein the process plane generating step generates the process plane based on inputted orientation information for a process plane.

31. The program according to any one of claims 24 to 30, wherein the reference point is selected in the object graphic or on the surface of the object graphic.

32. The program according to any one of claims 24 to 31, comprising the additional step of displaying a ground plane parallel to an X-Y, Y-Z or Z-X coordinate plane in the virtual 3D space on the graphic display part before the process plane generating step.

33. The program according to any one of claims 30 to 32, wherein the process plane generating step generates the process plane parallel to an X-Y, Y-Z or Z-X coordinate plane, based on the orientation information for the process plane.

34. The program according to any one of claims 24 to 33, wherein the graphic process performing step obtains an inputted drawing position on the process plane, and then draws graphics on the process plane based on the drawing position.

35. The program according to any one of claims 24 to 34, wherein the graphic process performing step connects or assembles graphics to be processed and graphics existing in the virtual 3D space.

36. The program according to any one of claims 24 to 35, wherein the process plane generating step moves the process plane in response to inputted information.

37. The program according to any one of claims 24 to 36, comprising the additional step of displaying graphics on the graphic display part by shifting a viewpoint position before the process plane generating step.

38. The program according to any one of claims 24 to 36, comprising the additional step of displaying graphics on the graphic display part by shifting a viewpoint position between the process plane generating step and the graphic process performing step.

39. The program according to any one of claims 24 to 36, comprising the additional step of displaying graphics on the graphic display part by shifting a viewpoint position after the graphic process performing step.

40. The program according to claim 39, wherein the graphics displaying step displays the process plane at the center of the display screen of the graphic display part every time the process upon the object graphic is performed.

41. The program according to any one of claims 37 to 40, wherein the graphics displaying step displays graphics on the graphic display part from a view perpendicular to the process plane.

42. The program according to any one of claims 24 to 41, comprising the additional step of displaying an initial graphic for setting the process plane initially in the virtual 3D space on the graphic display part before the process plane generating step, and wherein the process plane generating step generates the process plane on the basis of the initial graphic.

43. The program according to any one of claims 24 to 42, wherein the process plane is an assembly comprised of plural dots or lines located on a flat plane.

44. The program according to any one of claims 24 to 42, wherein the process plane is an assembly comprised of plural dots or lines located in the shape of a curved surface with a curvature radius.

45. The program according to claim 28, wherein the graphics processing means draws a line segment or draws plural connected line segments.

46. The program according to claim 45, wherein the graphics processing means calculates an overall length of a drawn line segment or a length of a line segment.

47. The program according to claim 32, wherein the ground plane is an assembly comprised of a plurality of equally spaced dots or lines.

48. The program according to any one of claims 24 to 47, wherein the process plane is semi-transparent so that an operator can see through the process plane to view graphics behind the process plane.

49. A 3-dimensional graphics processing method for performing a graphic process in a virtual 3D space with a computer, the method comprising the steps of:
generating (S18, S22, S32, S36, S606, S614) a process plane (400, 410, 420, 430, 440, 750, 760) in the virtual 3D space based on a reference point or a reference line whose location is determined by an object graphic (620, 640, 660,680);
performing (S26, S30, S624) a process upon the object graphic on the basis of the process plane in response to inputted information.

50. A 3-dimensional graphics processing apparatus comprising: an input part for receiving inputted information; a graphic display part for displaying graphics; and a processing part for performing a graphic process in a virtual 3D space,
wherein the processing part comprises: a plane generating means (S18, S22, S32, S36) operable to generate a process plane (400, 410, 420, 430, 440) including an end point of a drawn graphic in the virtual 3D space; and a graphics processing means (S30) operable to draw a new graphic on the process plane from a starting point corresponding to the end point of the drawn graphic.

51. A control program realizing a 3-dimensional graphics processing apparatus with a computer, the apparatus comprising: an input part for receiving inputted information; and a graphic display part for displaying graphics, the program comprising the steps of:
generating (S18, S22, S32, S36) a process plane (400, 410, 420, 430, 440) including an end point of a drawn graphic in the virtual 3D space;
drawing (S30) a new graphic on the process plane from a starting point corresponding to the end point of the drawn graphic.

52. A 3-dimensional graphics processing method for performing a graphic process in a virtual 3D space with a computer, the method comprising the steps of:
generating (S18, S22, S32, S36) a process plane (400, 410, 420, 430, 440) including an end point of a drawn graphic in the virtual 3D space;
drawing (S30) a new graphic on the process plane from a starting point corresponding to the end point of the drawn graphic.

53. A storage medium storing a program as set out in at least one of claims 24 to 48 and 51.

54. A signal carrying a program as set out in at least one of claims 24 to 48 and 51.
